(19) Europäisches Patentamt
European Patent Office
Office européen des brevets

(11) **EP 4 521 072 B1**

(12) **EUROPÄISCHE PATENTSCHRIFT**

(45) Veröffentlichungstag und Bekanntmachung des Hinweises auf die Patenterteilung:
**18.02.2026 Patentblatt 2026/08**

(21) Anmeldenummer: **23195480.1**

(22) Anmeldetag: **05.09.2023**

(51) Internationale Patentklassifikation (IPC):
*G01F 1/36* (2006.01)    *G01F 1/44* (2006.01)
*G01F 1/325* (2022.01)    *G01F 1/66* (2022.01)
*G01F 1/661* (2022.01)    *G01F 1/667* (2022.01)
*G01F 1/74* (2006.01)    *G01F 15/02* (2006.01)
*G01N 21/55* (2014.01)    *G01N 21/88* (2006.01)
*G01N 29/024* (2006.01)    *G01N 29/22* (2006.01)

(52) Gemeinsame Patentklassifikation (CPC):
G01F 1/44; G01F 1/325; G01F 1/3259;
G01F 1/3282; G01F 1/363; G01F 1/66; G01F 1/661;
G01F 1/662; G01F 1/668; G01F 1/74; G01F 15/024;
G01N 21/55; G01N 21/88; G01N 29/024;
G01N 29/222;          (Forts.)

(54) **WIRKDRUCKGEBER ZUR MESSUNG VON STRÖMUNGEN GASFÖRMIGER UND FLÜSSIGER FLUIDE SOWIE ENTSPRECHENDES VERFAHREN**

PRESSURE TRANSDUCER FOR MEASURING FLOWS OF GASEOUS AND LIQUID FLUIDS AND CORRESPONDING METHOD

TRANSMETTEUR DE PRESSION ACTIVE POUR MESURER DES COURANTS DE FLUIDES GAZEUX ET LIQUIDES ET PROCÉDÉ CORRESPONDANT

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**12.03.2025 Patentblatt 2025/11**

(73) Patentinhaber: **Friedrich Vorwerk SE & Co. KG 21255 Tostedt (DE)**

(72) Erfinder:
• **STEINER, Klaus**
**44795 Bochum (DE)**
• **AGLASTER, Guido**
**15745 Wildau (DE)**
• **DENKERS, Hendrik**
**21255 Tostedt (DE)**

(74) Vertreter: **Bittner, Thomas L. Boehmert & Boehmert Anwaltspartnerschaft mbB Pettenkoferstrasse 22 80336 München (DE)**

(56) Entgegenhaltungen:
GB-A- 2 571 405     US-A1- 2016 320 219
US-A1- 2022 178 590

**(Forts. nächste Seite)**

(52) Gemeinsame Patentklassifikation (CPC): (Forts.)
G01N 2291/02818

**Beschreibung**

Die Erfindung betrifft einen Wirkdruckgeber zur Messung von Strömungen gasförmiger und flüssiger Fluide sowie ein entsprechendes Verfahren zur Bestimmung der Messgenauigkeit eines Wirkdruckgebers.

Hintergrund

Die Erfindung geht aus von einem Wirkdruckgeber zur Messung von Strömungen gasförmiger und flüssiger Fluide mit einem Rohrkörper, welcher zwischen einem ersten und einem zweiten Anschlusselement angeordnet ist, wobei es vorgesehen ist, dass ein Fluid durch das erste Anschlusselement dem Rohrkörper zuströmt und durch das zweite Anschlusselement abströmt, wobei der Rohrkörper einen ersten Abschnitt mit einem ersten Durchmesser und stromabwärts davon angeordnet einen zweiten Abschnitt mit einem zweiten Durchmesser aufweist, welcher kleiner ist als der erste Durchmesser, wobei im ersten Abschnitt eine erste Druckmesseinrichtung und im zweiten Abschnitt eine zweite Druckmesseinrichtung angeordnet sind, wobei mittels der Druckmesseinrichtungen ein Differenzdruck zwischen erstem und zweitem Abschnitt bestimmbar ist. Ein derartiger Wirkdruckgeber ist bereits bekannt aus der Druckschrift DE 10 2017 001 049 A1 und US 2022/178590 A1.

Messgeräte für gasförmige und flüssige Fluide, die auf dem Unterschied des Wirkdruckes beruhen, sind seit Jahrzehnten eingesetzte Durchflussmessgeräte. Sie nutzen eine Druckdifferenz über Querschnittsverengungen in Rohrleitungen oder Behältern aus, um den Durchfluss zu bestimmen. Querschnittsverengungen können u.a. mittels Düsen, Blenden, Venturi-Drosselgeräten und Staukörpern wie Konen, Stauscheiben oder Keilen erzeugt werden. Aufgrund der Verengung erfolgt eine Geschwindigkeitszunahme des Messmediums bei gleichzeitiger Druckabsenkung zwischen zwei definierten Punkten, an denen Druckaufnehmer positioniert sind. Die Druckdifferenz ist proportional zum Quadrat der Strömungsgeschwindigkeit. Mit einer Auswerteelektronik lässt sich der Volumenstrom pro Zeiteinheit bestimmen und mit Kenntnis der Dichte des strömenden Mediums der Massenstrom. Einzelheiten werden in der Normenserie ISO 5167-1 bis 6 objektspezifisch nach Geometrie und Anwendungsverfahren definiert. Vorteile des Verfahrens sind der einfache Aufbau, die langjährige betriebliche Praxis, die Palette der Anwendungen in unterschiedlichen Industriebranchen mit diversen Fluiden. Nachteile sind die geringe Messdynamik und die Empfindlichkeit bezüglich, Druck- und Dichteschwankungen sowie geometrischen Veränderungen durch Verschleiß, Abrasion, Verschmutzung, Erosion bzw. Korrosion sowie sich verändernde Rohr- bzw. Behälterrauheit während des Betriebs.

Typische Anwendungsfelder, bei denen Wirkdruckverfahren zur Durchflussmessung eingesetzt werden sind u.a.

- Hochdruckerdgasmessanlagen in der Transportinfrastruktur
- Messung von Fluiden bei hohen Temperaturen (Dampf in Kraftwerken)
- $CO_2$-Transportanlagen zur Bestimmung von $CO_2$-Strömen in gasförmigem, flüssigem und überkritischem Zustand
- Bestimmung von Druckluftströmungen

Wirkdruckgeber bestimmen Strömungen bei Strömungsgeschwindigkeiten bis zu 90 m/s. Hohe Strömungsgeschwindigkeiten führen zu höheren Wirkdruckdifferenzen, die Messung wird präziser. Nachteilig wirkt sich aus, dass der damit einhergehende bleibende Druckverlust die Wirtschaftlichkeit der Messung belastet. Insofern ist verständlich, dass Bauformen bevorzugt werden, die bei akzeptabler Wirkdruckdifferenz zu einem geringen bleibenden Druckverlust führen. Eine solche Bauform stellt der Wirkdruckgeber dar, der in dem oben genannten Dokument DE 10 2017 001 049 A1 beschrieben wird.

Aus metrologischer Sicht stehen bei allen Messvorgängen die Messabweichungen der Messergebnisse im Fokus. Sie setzen sich aus den systematischen und den zufälligen Messabweichungen zusammen. Systematische Messabweichungen können auf Prüfständen erkannt werden. Bei der Messwertbildung wird in einem solchen Fall der Messwert um die bekannten systematischen Messabweichungen berichtigt, ggf. werden Gaszähler auf Prüfständen nachjustiert und deren verbleibende Messabweichung mit weiteren Prüfstandsmessungen verifiziert (Teil der Kalibrierung bzw. Eichung). Im geschäftlichen und amtlichen Verkehr müssen Messergebnisse laut europäischer Messgeräterichtlinie innerhalb zulässiger Messabweichungen liegen. Diese Grenzen, auch Fehlergrenzen genannt, werden in der Messgeräterichtlinie bzw. in den nationalen Umsetzungen - in Deutschland in der Mess- und Eichverordnung MessEV - festgelegt. Es handelt sich um gerätespezifische Kenngrößen, die im laufenden Betrieb nachweislich eingehalten werden müssen.

Das Messergebnis wird durch einen Messwert und eine ihm beigeordnete Messunsicherheit ausgedrückt. Sie kann positiv oder negativ sein. Die Messunsicherheit repräsentiert die zufälligen Einflüsse auf den Messvorgang, z.B. zufällig auftretende Störgrößen wie Partikel im Fluidstrom, Druckstöße, Temperaturschwankungen und Beschaffenheitsfluktuationen des Mediums zeigen sich als temporäre Messabweichungen. Sie sind keine gerätespezifischen Größen und werden daher dem Messwert in Form einer Unsicherheitsangabe zugeordnet. Wird die Messunsicherheit größer, werden Wiederholungsmessungen unpräziser. Als Richtschnur fordert die International Organization of Legal Metrology (OIML), dass die Messunsicherheit maximal ein Drittel der Fehlergrenze des Messgerätes betragen darf. Messunsicherheiten werden im Kalibrier- bzw. Eichschein dokumentiert.

Hohe Strömungsgeschwindigkeiten im Messgerät bedingen zur Vermeidung von Abrasion, Erosion und Korrosion ein Minimum an Begleitstoffen in der Strömung. Neuste Simulationen zur Mitnahme von Partikeln und Tropfen in Brenngasströmungen zeigen, dass im Erdgas ab 3 m/s durchschnittliche Strömungsgeschwindigkeit und im Wasserstoff ab etwa 10 m/s Partikel und Tropfen aufgewirbelt und mitgerissen werden. Englischsprachige Lehrbücher für Planer von Pipelines und verbundenen Anlagen empfehlen bei flüssigen Fördermedien 4 m/s Strömungsgeschwindigkeit nicht zu überschreiten, um Verschleiß, Abrasion bzw. Erosion durch feste Begleitstoffe zu vermeiden. Bei Gasen wird eine Grenzgeschwindigkeit von 5 m/s nahegelegt. Darüber hinaus werden empirisch ermittelte Näherungsgleichungen angegeben, um maximale Strömungsgeschwindigkeiten u.a. abhängig von Masse oder Temperatur abschätzen zu können.

Zur Minimierung der Abrasion, Erosion etc. durch das Strömungsmedium werden maximale durchschnittliche Strömungsgeschwindigkeiten beim Erdgas von 10 m/s und beim Wasserstoff von 40 m/s empfohlen.

Des Weiteren werden medienabhängige Mindestgeschwindigkeiten angegeben, um den Ausfall von Wasser aus feuchten Medien sicher verhindern zu können. Da verfahrensbedingt Stillstand nicht ausgeschlossen werden kann, ist selbst bei geringen Feuchtigkeitsanteilen mit Wasserstropfen in der Pipeline, verbundenen Anlagen bzw. Messgeräten und damit mit Korrosion zu rechnen. Abrasion, Erosion oder Korrosion haben einen signifikanten schädlichen Einfluss auf die Messgenauigkeit; die in der europäischen Messgeräterichtlinie (MID) und der deutschen MessEV geforderte Messbeständigkeit kann ggf. nicht mehr eingehalten werden.

Abrasiver (Ritzen, Abschabung, Mikrozerspanen) erosiver (Abtragung von Oberflächenmaterial) oder korrosiver (reaktive Zersetzung) Verschleiß der strömungsberührenden Innenfläche des Diffusors und Konfusors des Wirkdruckgebers führt zu einer systematischen Messabweichung (Messgenauigkeit, früher Messfehler) des Messgeräts, die schleichend mit der Lebensdauer zunimmt und aus metrologischer Sicht unzulässige Werte erreichen kann. Klassisch lässt sich das Phänomen nur durch Wiederholungskalibrationen erkennen und bei der Messwertbestimmung berücksichtigen. Inwiefern eine Wiederholungskalibration erforderlich ist oder sich noch weiter hinausschieben lässt, ist leider erst mit dem Kalibrationsergebnis feststellbar. Ist dies verschleißbedingt nicht mehr möglich, ist das Messgerät auszutauschen.

Erfahrungsgemäß werden die Anforderungen des geschäftlichen und amtlichen Verkehrs an die Messgenauigkeit auch bei reinen betrieblichen Messungen sinngemäß übernommen. Nachvollziehbar wird dies bei betrieblichen Messungen zur Gewährleistung der technischen Betriebssicherheit oder bei Prozesssteuerungen zur Sicherstellung von Produktqualitäten.

Zusammenfassung

Es ist die Aufgabe der vorliegenden Erfindung, einen Wirkdruckgeber derart weiterzuentwickeln, dass mit diesem abrasions-, erosions- und korrosionsverursachte Messungenauigkeiten bei der Messwertbildung kompensiert werden können und eine Verfälschung des Messergebnisses dadurch verhindert werden kann.

Die Aufgabe wird gelöst mit den Merkmalen der unabhängigen Ansprüche. Vorteilhafte Ausgestaltungen sind jeweils in den Unteransprüchen angegeben.

Demgemäß ist vorgesehen, dass im Rohrkörper ferner eine Quelle zum Aussenden elektromagnetischer Strahlung, beispielsweise gebündelten Lichts, eine reflektierende Fläche sowie zumindest eine Fotozelle angeordnet sind, welche so zueinander ausgerichtet sind, dass die von der Quelle ausgesendete Strahlung auf die reflektierende Fläche fällt und von dieser gerichtet oder diffus auf die Fotozelle reflektiert wird, wobei der Wirkdruckgeber ferner eine Auswerteeinheit aufweist, mittels welcher eine Abnahme und/oder Zunahme der seitens der Fotozelle detektierten Strahlungsintensität bestimmbar ist.

Durch die vorliegende Erfindung können erosions- und korrosionsverursachte Messungenauigkeiten bei der Messwertbildung kompensiert und eine Verfälschung des Messergebnisses dadurch verhindert werden. Dies geschieht durch

1. eine optische Vorrichtung zur kontinuierlichen Bestimmung der Abrasion, Erosion bzw. Korrosion
2. eine elektronische Bewertung des Ausmaßes dieses Einflusses und, falls zulässige Grenzwerte überschritten werden,
3. die rechnerische Berücksichtigung des Einflusses auf die Messwertbildung.

Der Wirkdruckgeber kann eine Information einer sensorischen Einrichtung im Messgerät erhalten, die den abrasiv-, erosions- und korrosionsbedingten Verschleiß feststellt. Der Einfluss des Verschleißes auf die Messwertbildung kann auf zertifizierten Prüfständen bzw. mit Testgeräten in anerkannten Prüflaboratorien anhand von Testgeräten oder Materialproben abhängig vom Medium, dessen Beschaffenheit und den Betriebsbedingungen, sofern nicht bekannt, vorab festgestellt und in Betriebshandbüchern oder elektronisch im Gerät selbst hinterlegt werden. Das Messgerät kann selbst anhand der hinterlegten bzw. gespeicherten Informationen entscheiden, inwiefern der Messwert bei der Messwertbildung korrigiert bzw., sofern der Verschleiß noch zulässig ist, vernachlässigt werden. Aufwendige Zwischenprüfungen, wie sie bei Wirkdruckgebern üblich sind, können so reduziert oder sogar ganz vermieden werden. Die Erfindung vermeidet Fragen zum Einfluss des Verschleißes und erhöht das Vertrauen der beteiligten Handelspartner in das Messergebnis. Dies gilt insbesondere für den geschäftlichen oder den amtlichen Verkehr. Darüber hinaus ist die in das Messgerät integrierte Korrektureinrichtung erheblich kostengünstiger als der Ausbau des Messgerätes, der ersatzweise Betrieb eines weiteren Messgerätes und/oder die (Neu-) Kalibrierung auf einem zertifizierten und anerkannten Prüfstand für das entsprechende Medium.

Zur Bestimmung des Verschleißzustands im Wirkdruckgeber nutzt die Erfindung das unterschiedliche Verhalten der gerichteten und diffusen Reflexion. Eine für das Prozessfluid transparente elektromagnetische Welle, beispielsweise ein Lichtsignal, wird auf die Stelle im Wirkdruckgeber gerichtet, an der beispielsweise die größte Abrasion, Erosion bzw. Korrosion erwartet wird. In der Regel ist dies die Stelle mit der höchsten Strömungsgeschwindigkeit am Ende des Konfuserabschnitts. Dieser Ort wird metallisch spiegelnd ausgeführt. Die Reflexion der Welle bzw. des Lichtstrahls an der spiegelnden Innenoberfläche lässt sich mit dem Reflexionsgesetz beschreiben (Einfallswinkel gleich Ausfallswinkel). Wird die spiegelnde Oberfläche durch Abrasion, Erosion oder Korrosion rauer, geht die gerichtete Reflexion in die diffuse Reflexion über. Die reflektierende Fläche bekommt viele Streuzentren, die in der Summe dazu führen, dass die Hauptrückstreuung unabhängig vom Reflexionsgesetz erfolgt. Sie erfolgt dann senkrecht zum Material. Die diffuse Streuung folgt dem Lambertschen Gesetz.

Im Neuzustand wird der elektromagnetische Strahl, insbesondere Lichtstrahl, von der ersten Fotozelle, welche schräg gegenüber der reflektierenden Fläche angeordnet ist, nahezu vollständig detektiert. Die zweite Fotozelle, welche senkrecht gegenüber der reflektierenden Fläche angeordnet ist, empfängt so gut wie keinen Anteil, der von der reflektierenden Fläche gestreuten Lichtwelle. Im Laufe des Betriebs wird die reflektierende Oberfläche rauer, die gerichtete Reflexion geht zunehmend in die diffuse Reflexion über. Das wird über die zweite Fotozelle detektiert, deren Signal wird zu Lasten des Lichteinfalls in die Fotozelle größer. Das Verhältnis der Lichtausbeute der Fotozellen und kann konsequenterweise mit den Labor- oder Prüfstandsergebnissen zum Verschleiß der spiegelnden metallischen Oberfläche in Zusammenhang gebracht werden. Damit kann der Wirkdruckgeber einen Wert, um zulässige bzw. unzulässige Verschleißwerte festzustellen bzw. bei hinterlegter Prüfstandsinformation zu dem Zusammenhang zwischen Verschleißfortschritt und Messfehler bzw. Größe der Messgenauigkeit automatisch korrigieren.

Es kann vorgesehen sein, dass die reflektierende Fläche ein Spiegel ist. Es kann ferner vorgesehen sein, dass die reflektierende Fläche eine geschliffene metallische Fläche im Inneren des Rohrkörpers ist. Eine mögliche konstruktionsbedingte Krümmung der Position ist für die Reflexion unerheblich. Gerichtete Reflexionen treten auch an Hohlspiegeln wie z.B. einem Rasierspiegel oder astronomischen Spiegelteleskopen oder auch an konvex gekrümmten Außenspiegeln von PKW, also auch einer spiegelnden metallischen Oberfläche an der Innenwandung des Wirkdruckgebers auf.

Es kann vorgesehen sein, dass auf Grundlage der Kenntnis von Abrasion, Erosionen und Korrosion an der Innenoberfläche des Wirkdruckgebers bzw. der Veränderung des dadurch bedingten Verschleißes der verursachte systematische Messfehler bzw., korrekter gesagt, die systematische Messabweichung festgestellt bzw. korrigiert wird. Systematische Messabweichungen lassen sich auf Prüfständen bewerten bzw. quantifizieren. Es kann vorgesehen sein, dass entsprechende Werte vor dem Feldeinsatz experimentell erfasst wurden und z.B. tabellarisch in der Auswerteeinheit des Wirkdruckgeber hinterlegt sind. Die Tabelle kann dann dazu dienen, das Messergebnis im Betrieb zu korrigieren. Hierzu kann ein Schwellenwert einer Sensorik im Wirkdruckgeber während des Betriebs überwacht werden. Beim Erreichen des bzw. der Schwellenwertes werden die dann folgenden Messwerte automatisch korrigiert. Solange der Schwellenwert nicht überschritten ist, werden zusätzliche Messabweichungen akzeptiert und vernachlässigt.

Es kann vorgesehen sein, dass zumindest eine Fotozelle bezogen auf die reflektierende Fläche symmetrisch zur Quelle so angeordnet ist, dass der von der reflektierenden Fläche reflektierte gerichtete Strahl auf die Fotozelle trifft, wobei mittels der Auswerteeinheit ein Unterschreiten eines vorbestimmten Schwellenwerts der seitens der Fotozelle detektierten Strahlungsintensität erfasst wird. Das Abnehmen der seitens der schräg gegenüberliegenden Fotozelle erfassten Strahlungsintensität der gerichteten Reflexion geht einher mit einem zunehmenden Verschleiß der reflektierenden Fläche, der Anteil an diffuser Reflexion wird größer.

Die Festlegung des Ein- bzw. gleich großen Ausfallwinkels des Lichtstrahls kann bevorzugt so gewählt werden, dass möglichst wenig Streulicht der gerichteten Reflexion in die zweite Fotozelle fällt. Dies bedeutet, die Winkel möglichst groß zu wählen. Die Winkel werden aber konstruktiv durch die maximale Länge des Abströmbereichs des Rohrkörpers begrenzt und ergeben sich dann rein rechnerisch aus dem Kotangens des Verhältnisses aus Länge Abströmbereich und dem Durchmesser des Abströmbereichs.

Ferner kann vorgesehen sein, dass zumindest eine Fotozelle senkrecht gegenüber der reflektierenden Fläche so angeordnet ist, dass die Hauptrückstreuung der von der reflektierenden Fläche reflektierten diffusen Reflexion auf die Fotozelle trifft, wobei mittels der Auswerteeinheit ein Überschreiten eines vorbestimmten Schwellenwerts der seitens der Fotozelle detektierten Strahlungsintensität erfasst wird. Das Zunehmen der seitens der senkrecht der reflektierenden Fläche gegenüberliegenden Fotozelle erfassten Strahlungsintensität der diffusen Reflexion geht einher mit einem zunehmendem Verschleiß der reflektierenden Fläche, der Anteil an gerichteter Reflexion wird geringer.

Es ist denkbar, dass die reflektierende Fläche zwischen der ersten und der zweiten Druckmesseinrichtung angeordnet ist. Ferner kann die reflektierende Fläche bezogen auf den Rohrumfang an einem gravitatorischen Tiefstpunkt des Rohrkörpers angeordnet sein. Dies kann dann sinnvoll sein, wenn auch der Einfluss von Kontaminationen z.B. durch Öle an der Innenwandung des Messgerätes miterfasst werden soll. Grundsätzlich kann die spiegelnde Fläche aber auch an weiteren Positionen angebracht werden. Die gesamte sensorische Einrichtung würde dann bildlich gesprochen rotationssymmetrisch gedreht und positioniert werden.

Die reflektierende Fläche kann im Rohrkörper bezogen auf die Strömungsrichtung beispielsweise an der Stelle mit der höchsten Strömungsgeschwindigkeit, beispielsweise im zweiten Abschnitt mit gegenüber dem ersten Abschnitt verringertem Durchmesser, angeordnet sein.

Ferner kann die Quelle elektromagnetischer Strahlung stromaufwärts der ersten Druckmesseinrichtung angeordnet sein. Die schräg gegenüber der reflektierenden Fläche angeordnete Fotozelle kann stromabwärts der zweiten Druckmesseinrichtung angeordnet sein. Je nach Auslegung und Dimensionierung kann die Fotozelle jedoch auch vor oder hinter dem Drucksensor positioniert sein.

Es kann vorgesehen sein, dass bei Über- und/oder Unterschreiten eines vorbestimmten Schwellenwerts der seitens der Fotozelle detektierten Strahlungsintensität eine vorbestimmte Korrektur der seitens des Wirkdruckgebers ermittelten Druckdifferenz bzw. der bestimmten Durchflussmenge vorgenommen wird.

Ferner kann vorgesehen sein, dass die reflektierende Fläche eine Beschichtung aufweist, welche dazu eingerichtet ist, den Einfluss eines spezifischen Begleitstoffes wie Feuchtigkeit auf die Messgenauigkeit bestimmen zu können. Vorteile sind, dass die Abrasion, Erosion bzw. Korrosion gezielt auf das strömende Medium bzw. auf Begleitstoffe abgestimmt werden kann. So könnte auch ausfallende Feuchtigkeit die Beschichtung trüben, so dass der Übergang von gerichteter zu diffuser Reflexion zielgerichteter und/oder schneller erfolgt.

Die Erfindung betrifft ferner einen Wirkdruckgeber zur Messung von Strömungen gasförmiger und flüssiger Fluide mit einem Rohrkörper, welcher zwischen einem ersten und einem zweiten Anschlusselement angeordnet ist, wobei es vorgesehen ist, dass ein Fluid durch das erste Anschlusselement dem Rohrkörper zuströmt und durch das zweite Anschlusselement abströmt, wobei der Rohrkörper einen ersten Abschnitt mit einem ersten Durchmesser und stromabwärts davon angeordnet einen zweiten Abschnitt mit einem zweiten Durchmesser aufweist, welcher kleiner ist als der erste Durchmesser, wobei im ersten Abschnitt eine erste Druckmesseinrichtung und im zweiten Abschnitt eine zweite Druckmesseinrichtung angeordnet sind, wobei mittels der Druckmesseinrichtungen ein Differenzdruck zwischen erstem und zweitem Abschnitt bestimmbar ist, wobei im Zuströmabschnitt oder im Ausgleichsrohr radial über den Rohrumfang verteilt eine Mehrzahl Drucksensoren zum Erfassen des örtlichen Fluiddrucks angeordnet ist, welche mit der Auswerteeinheit verbunden sind, wobei die Auswerteeinheit dazu eingerichtet ist, anhand der mittels der Mehrzahl Drucksensoren ermittelten Druckdifferenzen den Drall des einströmenden Fluids zu erfassen bzw. das Messergebnis entsprechend zu korrigieren. Alternativ kann vorgesehen sein, dass stromaufwärts des ersten Abschnitts ein Zuströmabschnitt angeordnet ist, über dessen Umfang radial verteilt die Mehrzahl Drucksensoren zum Erfassen des örtlichen Fluiddrucks angeordnet ist, welche mit der Auswerteeinheit verbunden sind, wobei die Auswerteeinheit dazu eingerichtet ist, anhand von mittels der Mehrzahl Drucksensoren über den Umfang des Zuströmabschnitts ermittelten Druckdifferenzen den Drall des einströmenden Fluids zu erfassen.

Vorteilhaft ist die Trennung der Drucksensorik zur Erfassung der Wirkdruckdifferenz und der das Messergebnis schädlich beeinflussender Verwirbelungen (Drall), da die Wirkdruckdifferenz und die Druckänderungen durch Drall bzw. Verwirbelungen in verschiedenen Wertebereichen bzw. Skalen auftreten können. Die Trennung der Drucksensorik erlaubt die technisch wie wirtschaftliche Optimierung der Drucksensoren.

Die Drucksensoren dienen zur Verbesserung der Messgenauigkeit über die Drallerkennung des Prozessfluids, welche durch Einlaufstörungen verursacht werden können (z.B. durch Rohrkrümmer oder Einbauten in die verbundenen Rohre vor dem Messgerät). Die Anordnung von zwei oder mehr Messaufnehmern wie Drucksensoren über den Umfang des Messrohres verteilt führt zu einer dynamischen Messwertaufnahme über mehrere Pfade und steigert die Genauigkeit der Bestimmung der Strömungsstörungen durch Wirbel und Drall.

Durch die Nutzung von zwei oder mehr Messaufnehmern kann ferner die automatische Nullpunktkorrektur in ihrem Ablauf optimiert und verifiziert werden. Stand der Technik ist eine Nullpunktkorrektur des Differenzdrucktransmitters im eingebauten Zustand durch Trennung vom Prozess und die Öffnung einer Ausgleichsleitung über einen manuellen Ventilblock. Mit zwei oder mehr Messaufnehmern kann diese Korrektur bei Stillstand des Mediums erfolgen. Dabei überwacht ein Sensor während der Nullpunktkorrektur des anderen Sensors, ob sich das Prozessfluid bewegt. Ein manueller Eingriff ist daher nicht mehr nötig.

Die Erfindung betrifft ferner einen Wirkdruckgeber zur Messung von Strömungen gasförmiger und flüssiger Fluide mit einem Rohrkörper, welcher zwischen einem ersten und einem zweiten Anschlusselement angeordnet ist, wobei es vorgesehen ist, dass ein Fluid durch das erste Anschlusselement dem Rohrkörper zuströmt und durch das zweite Anschlusselement abströmt, wobei der Rohrkörper einen ersten Abschnitt mit einem ersten Durchmesser und stromabwärts davon angeordnet einen zweiten Abschnitt mit einem zweiten Durchmesser aufweist, welcher kleiner ist als der erste Durchmesser, wobei im ersten Abschnitt eine erste Druckmesseinrichtung und im zweiten Abschnitt eine zweite Druckmesseinrichtung angeordnet sind, wobei mittels der Druckmesseinrichtungen ein Differenzdruck zwischen erstem und zweitem Abschnitt bestimmbar ist, wobei in einem Zuströmabschnitt zwischen dem ersten Anschlusselement und dem ersten Abschnitt oder einem Abströmabschnitt zwischen dem zweiten Abschnitt und dem zweiten Anschlusselement des Wirkdruckgebers eine Messeinrichtung zum Ermitteln von Dichteschwankungen des Prozessfluids angeordnet ist, welche einen Ultraschalltransmitter und einen Ultraschallempfänger umfasst, welche so zueinander ausgerichtet sind, dass ein seitens des Ultraschalltransmitters durch das Prozessfluid ausgesendeter Ultraschallimpuls seitens des Ultraschallempfängers empfangen werden kann, wobei die Messeinrichtung mit der Auswerteeinheit verbunden ist, welche dazu eingerichtet ist, anhand von Laufzeitveränderungen der ausgesendeten Ultraschallimpulse Dichteschwankungen im Prozessfluid zu erkennen.

Im Zuge der Anforderungen zur klimaneutralen Versorgung der Allgemeinheit mit Brenngasen wird die vermehrte Verteilung von Biogasen und insbesondere Wasserstoff gefordert. Hier spielt die stoffliche wie energetische Versorgung der Industrie mit Wasserstoff eine zunehmende, bald dominierende Rolle. Dies berücksichtigt die europäische und deutsche Wasserstoffstrategie. Im Falle der leitungsgebundenen Versorgung der Allgemeinheit führt dies zur vermehrten Einspeisung von Wasserstoff in die deutschen und europäischen Gasnetze. Die Produktion von erneuerbarem bzw. klimaneutralem Wasserstoff folgt der erneuerbaren Stromdarbietung aus Solar- und Windenergieanlagen. Die Darbietung ist volatil und schwankt erheblich. Konsequenterweise wird die stoffliche Zusammensetzung der Brenngasdarbietung schwanken. Je nach Wasserstoffanteil im Brenngas schwankt daher die Dichte des Gases, die wiederum das Messergebnis eines Wirkdruckmessgerätes signifikant beeinflusst. Dieser Einfluss ist nicht systematisch, sondern zufällig, da dieser Einfluss von der eingespeisten Wasserstoffmenge bzw. von der Wind- und Sonnenenergie abhängig ist. Solche Einflüsse sind zufällige Störgrößen, die die Messunsicherheit des Wirkdruckmessgerätes erheblich vergrößern und das Vertrauen in das Messergebnis beeinträchtigen. Um dies zu vermeiden, setzen Netzbetreiber eichrechtlich zugelassene Beschaffenheitsmessgeräte wie Prozessgaschromatografen ein oder berechnen die Beschaffenheit aufwendig mit Gasbeschaffenheitsverfolgungssystemen, die eichrechtlich zugelassen sein müssen.

Durch die vorliegende Erfindung wird die Zunahme oder Drift der Messunsicherheit durch Dichteschwankungen mittels einer weiteren sensorischen Einrichtung registriert und bei der Messwertbildung gemäß Berechnungsvorschrift nach ISO 5167-1 bis 6 berücksichtigt. Im Falle unzulässiger Messunsicherheiten kann die Messwertbildung unterdrückt und diese Unterdrückung als Störung am Zählwerk / Index angezeigt bzw. an elektronischen Schnittstellen zur Verfügung gestellt werden.

Wirkdruckgeber messen Strömungen von Fluiden, deren Beschaffenheit sich ändern können. In komplex zusammengesetzten Medien wie Erdgasen ist eine Verschiebung der stofflichen Anteile bis in den Prozentbereich üblich. Dies kommt z.B. in komplexen Netzstrukturen bei Mehrseitenaufspeisungen vor. Typisches Beispiel ist ein kommunales Verteilnetz mit dem Hauptbestandteil Erdgas, in das an unterschiedlichen Stellen Biogas und /oder Wasserstoff eingespeist wird. Prozessbedingt ist aber nahezu ausgeschlossen, dass die in dem Netz eingebauten Messstrecken nacheinander mit völlig unterschiedlichen Medien konfrontiert werden - z.B. Gas und dann Flüssigkeiten. Das bedeutet, dass physikalisch chemische Parameter des stofflichen Stroms sich kontinuierlich ändern oder fluktuieren können, aber sie springen nicht um Größenordnungen zu völlig anderen Werten.

Beschaffenheitsschwankungen, wie oben erläutert, wirken sich als Störgröße aus, die in die Messunsicherheit eingeht. Es wird mit zunehmender Einspeisung regenerativer Gase wie Wasserstoff die wesentliche Störgröße sein, die zu vergrößerten Messunsicherheiten führen.

Beschaffenheitsschwankungen äußern sich physikalisch als Dichteschwankungen. Diesen Zusammenhang nutzt die vorliegende Erfindung, um zunehmende Messunsicherheiten detektieren und im Wirkdruckgeber elektronisch kompensieren zu können.

Demnach besteht eine Aufgabe der Erfindung darin, einen Wirkdruckgeber derart zu verbessern, dass dieser Dichteschwankungen des Prozessfluids bei der Bestimmung der Durchflussmenge berücksichtigen kann.

Dichteschwankungen korrespondieren direkt mit der Fluktuation der Schallgeschwindigkeit des Mediums. Mittel, um solche Schwankungen zu erfassen sind Laufzeitmessungen von akustischen Wellen, bevorzugt von Ultraschallsignalen, durch das Medium. Hierzu wird ein Ultraschallsensorpaar im Ausgleichsrohr so positioniert, dass der ausgesandte Ultraschallimpuls vom ersten durch das Medium zum zweiten empfangenden Ultraschallsensor läuft. Der erforderliche Transmitter bzw. Messumformer kann in die Elektronik des Wirkdruckgebers integriert werden.

Erfindungsgemäß befindet sich eine Ultraschalltransmitter und -empfänger im Ausgleichsrohr oder im Abströmbereich. Nachfolgend wird die Erfindung nur anhand der Positionierung des Sensorpaares im Ausgleichsrohr weiter diskutiert.

Um Einflüsse durch Verschmutzungen und Ablagerungen auf die Laufzeitmessung zu vermeiden, können die Sensoren anstelle der Positionierung eines Sensors im Tiefpunkt des Rohres bevorzugt in der 3 oder 9-Uhr-Position des Ausgleichsrohres positioniert werden. Des Weiteren können die Sensoren etwas vertieft in der Wandung des Ausgleichsrohrs angeordnet sein, dergestalt, dass ein hinreichend starker Ultraschallimpuls in das Ausgleichsrohr abgegeben werden kann und gleichzeitig Abrasion bzw. Erosionen des Sensors durch die Strömung minimiert werden. Der Impuls des aussenden Sensors kann direkt zum Empfänger z.B. von der 3- in der 9-Uhr-Position gestrahlt werden. Anstelle der Direktstrahlung des akustischen Signals vom Sender zum Empfänger kann grundsätzlich auch das akustische Signal durch Reflexion an der Innenwandung des Ausgleichsrohrs vom Sender zum Empfänger gesendet werden. Dies erlaubt Freiheitsgrade bei der Positionierung des Senders und Empfängers. Vorteilhaft ist die Positionierung fern von Tiefpunkten im Rohr z.B. die Positionierung des Senders und Empfängers in der 3-Uhr Position und Reflexion an der 9-Uhr Position. Die Laufzeit ergibt sich in allen Fällen aus dem Zeitpunkt des Eingangs des akustischen Signals abzüglich des Zeitpunktes des ausgesandten Signals.

Die Veränderung der Laufzeit ist ein starker Indikator für Dichteschwankungen des Mediums, sofern vorausgesetzt werden kann, dass sich das Medium nicht grundsätzlich ändert, was bei der leitungsgebundenen Versorgung der Allgemeinheit mit Gasen, wie oben erläutert gegeben ist. Grundsätzlich lässt sich aus der Frequenz der Dichteschwankungen die Vergrößerung der Messunsicherheit berechnen und auf dieser Basis das Messergebnis (Messwert und Messunsicherheit) angeben bzw. die Drift der Messunsicherheit elektronisch im Wirkdruckgeber kompensieren. Es ist aber erfindungsgemäß vorteilhafter, den Zusammenhang zwischen Dichteschwankung und Messunsicherheit auf akkreditierten Prüfständen oder in anerkannten Prüflaboratorien medien- und dimensionsabhängig zu bestimmen. Die Prüfstandsergebnisse können in der Auswerteeinheit hinterlegt und in Abhängigkeit der mit der Erfindung gemessenen Dichteschwankung zur Kompensation der Messunsicherheit durch Veränderung der Beschaffenheit herangezogen werden. Eine solche Kombination aus "messtechnischer statt theoretischer (berechneter) Prüfung" mit der erfindungsgemäßen Einrichtung zum Zwecke der Kompensation kann als Qualitätsmerkmal des jeweiligen in Verkehr gebrachten Wirkdruckgebers angesehen werden. Sie lässt sich als Teil der in der Regel erforderlichen Kalibrierung bzw. Eichung ausführen und erhöht signifikant die Akzeptanz der erfindungsgemäßen Kompensation von erhöhten bzw. driftenden Messunsicherheiten im Wirkdruckgeber.

Es kann vorgesehen sein, dass der Ultraschalltransmitter und der Ultraschallempfänger gegenüberliegend angeordnet sind und sich bezogen auf den Rohrumfang jeweils außerhalb des gravitatorischen Tiefstpunkts des Rohrkörpers befinden. Ferner kann vorgesehen sein, dass der Ultraschalltransmitter und der Ultraschallempfänger in Strömungsrichtung hintereinander im Zuströmabschnitt oder im Abströmabschnitt angeordnet sind und so zueinander ausgerichtet sind, dass ein seitens des Ultraschalltransmitters ausgesendeter Ultraschallimpuls von der gegenüberliegenden Rohrinnenwand zurückgeworfen wird und von dort zum Ultraschallempfänger reflektiert wird.

Ferner ist denkbar, dass der Ultraschalltransmitter und der Ultraschallempfänger vertieft in die Wandung des Rohrkörpers eingelassen sind. Beispielsweise können der Ultraschalltransmitter und der Ultraschallempfänger hinter der Rohrinnenwand angeordnet sein, so dass der Ultraschalltransmitter und der Ultraschallempfänger vom Prozessfluid und somit von darin enthaltenen verschleißfördernden Elementen abgeschirmt sind.

Die Erfindung betrifft ferner ein Verfahren zur Bestimmung der Messgenauigkeit eines Wirkdruckgebers, insbesondere nach einem der vorangehenden Ansprüche, umfassend die Schritte: Durchleiten eines Prozessfluids durch den Wirkdruckgeber; Bestimmen eines ersten Drucks in einem ersten Abschnitt eines Rohrkörpers des Wirkdruckgebers und Bestimmen eines zweiten Drucks in einem zweiten Abschnitt des Rohrkörpers, wobei der Innendurchmesser des Rohrkörpers im ersten Abschnitt größer ist als im zweiten Abschnitt; Ermitteln der Druckdifferenz zwischen erstem und zweitem Druck und Bestimmen einer Durchflussmenge des durchgeleiteten Prozessfluids; Aussenden einer elektromagnetischen Welle von einer an oder in einer Innenwand des Rohrkörpers angeordneten Quelle auf eine reflektierende Fläche, welche auf einem der Quelle gegenüberliegenden Innenwandabschnitt des Rohrkörpers angeordnet ist, wobei die elektromagnetische Welle nicht senkrecht auf die reflektierende Fläche trifft; Gerichtetes Reflektieren der elektromagnetischen Welle von der reflektierenden Fläche auf eine der reflektierenden Fläche schräg gegenüberliegenden Fotozelle und/oder diffuses Reflektieren auf eine der reflektierenden Fläche senkrecht gegenüberliegenden Fotozelle; Bestimmen einer Abnahme der mittels der schräg gegenüberliegenden Fotozelle detektierten Strahlungsintensität und/oder Bestimmen einer Zunahme der mittels der senkrecht gegenüberliegenden Fotozelle detektierten Strahlungsintensität; und Vornehmen einer vorbestimmten Korrektur der seitens des Wirkdruckgebers ermittelten Druckdifferenz bei Über- und/oder Unterschreiten eines vorbestimmten Schwellenwerts der seitens der Fotozelle detektierten Strahlungsintensität.

Durch Berücksichtigung des gemessenen Verschleißes bei der Messwertbestimmung kann der Messwert um die durch den Verschleiß bedingte systematische Messabweichung elektronisch korrigiert werden (Abweichungskompensation).

Ferner kann vorgesehen sein, den vorbestimmten Schwellenwert als Warnung auf dem Index (Zählwerk) des Wirkdruckgebers anzuzeigen oder an die Automation zu signalisieren. Ferner kann vorgesehen sein, dass bei Erreichen eines weiteren Schwellenwerts einen Alarm an den Bediener zu kommunizieren.

Der Rohrkörper kann in Strömungsrichtung des Fluids gesehen zunächst einen Zuströmabschnitt mit einem ersten Strömungsquerschnitt aufweisen. Nachfolgend kann der Rohrkörper einen Diffusorabschnitt mit einem sich kontinuierlich bis zu einem zweiten Strömungsquerschnitt vergrößernden Strömungsquerschnitt aufweisen. Daran kann sich ein Konfusorabschnitt mit einem sich kontinuierlich bis zum ersten Strömungsquerschnitt verkleinerndem Strömungsquerschnitt anschließen. Nachfolgend kann ein Abströmabschnitt mit dem ersten Strömungsquerschnitt angeordnet sein. Die erste Druckmesseinrichtung kann im Zuströmabschnitt oder im Abströmabschnitt angeordnet sein. im Bereich des zweiten Strömungsquerschnitts kann die zweite Druckmesseinrichtung angeordnet sein. Es kann vorgesehen sein, dass zwischen dem ersten Anschlusselement und dem Zuströmabschnitt ein Ausgleichsrohr angeordnet ist, und dass ein Verhältnis zwischen einer Ausgleichsrohrlänge des Ausgleichsrohres und einem Rohrinnenmaß des Ausgleichsrohres wenigstens 2,5 beträgt.

Es kann vorgesehen sein, dass im Zuströmabschnitt oder im Abströmabschnitt wenigstens eine dritte Druckmesseinrichtung angeordnet ist, so dass der Zuströmabschnitt und der Abströmabschnitt entweder die wenigstens eine zweite oder die wenigstens eine dritte Druckmesseinrichtung aufweisen.

Es ist denkbar, dass ein Quotient von einem zweiten Innenmaß des Rohrkörpers zu einem ersten Innenmaß des Zuströmabschnittes wenigstens 1,2 und höchstens 2,5, idealerweise jedoch 1,5 beträgt.

Ferner ist denkbar, dass ein Quotient von einer Länge des Diffusorabschnitts zu einer Länge des Konfusorabschnittes in Strömungsrichtung gesehen wenigstens 1 und höchstens 5, vorzugsweise 3,7 ist.

Der Quotient vom zweiten Innenmaß des Rohrkörpers zur Länge des Diffusorabschnittes kann wenigstens 0,3 und höchstens 0,5 betragen.

Zwischen dem Diffusorabschnitt und Konfusorabschnitt kann ein Messabschnitt zwischengefügt sein, der das zweite Innenmaß aufweist und eine Messabschnittslänge hat, deren maximales Längenmaß dem Wert der Hälfte des ersten Innenmaßes entspricht.

Es kann vorgesehen sein, dass wenigstens eine der Druckmesseinrichtungen als Kopplungsausnehmung so ausgestaltet ist, dass diese zum Anschluss eines Kopplungselementes oder zur Einführung von Sensoren zur visuellen Kontrolle, zur geometrischen Vermessung oder zur Kalibration des messtechnisch relevanten Bereiches des Rohrkörperinneren geeignet ist.

Die wenigstens eine Kopplungsausnehmung kann mit einem mit dem Rohrkörper verbundenen Kopplungselement zusammenwirken, das eine erste und/oder eine zweite Anschlussausnehmung für einen Druckmesssensor oder eine Wirkdruckleitung eines Druckmessgerätes aufweist oder zum Anschluss oder Einführung von Sensoren geeignet ist.

Es kann vorgesehen sein, dass eine Anschlussausnehmung durch eine Aussengewindekappe, einen Innengewindestopfen, einen Flanschdeckel, einen Clampdeckel oder ein anderes Verschlusselement verschließbar oder verklebbar oder verschweißbar ist.

Es kann ferner vorgesehen sein, dass das Anschlusselement mit einer Ausgleichsvorrichtung verbunden ist, mit der das freie Volumen in der Wirkdruckleitung veränderbar ist.

Das Anschlusselement kann mit einer Reinigungsvorrichtung verbunden sein, mit der die mit dem Anschlusselement verbundene Druckabnahmeausnehmung bedarfsweise reinigbar ist.

Beschreibung von Ausführungsbeispielen

Im Folgenden werden weitere Ausführungsbeispiele unter Bezugnahme auf Figuren einer Zeichnung näher erläutert. Hierbei zeigen:

Fig. 1    eine Querschnittsansicht einer Ausführungsform des erfindungsgemäßen Wirkdruckgebers;
Fig. 2    eine perspektivische Ansicht eines erfindungsgemäßen Wirkdruckgebers mit Ultraschallmessung;
Fig. 3    eine Seitenansicht eines Ausgleichsrohrs eines erfindungsgemäßen Wirkdruckgebers mit Ultraschallmessung;
Fig. 4a    eine beispielhafte Ansicht eines nicht achssymmetrischen Strömungsprofils;
Fig. 4b    eine beispielhafte Darstellung einer Drall aufweisenden Strömung;
Fig. 5    eine Längsschnittansicht eines erfindungsgemäßen Wirkdruckgebers mit radial über den Umfang verteilt im Zuström- oder Abströmbereich angeordneten Drucksensoren;
Fig. 6    beispielhafte Verfahrensabläufe zur Messwertkorrektur und zur Nullpunkteinstellung.

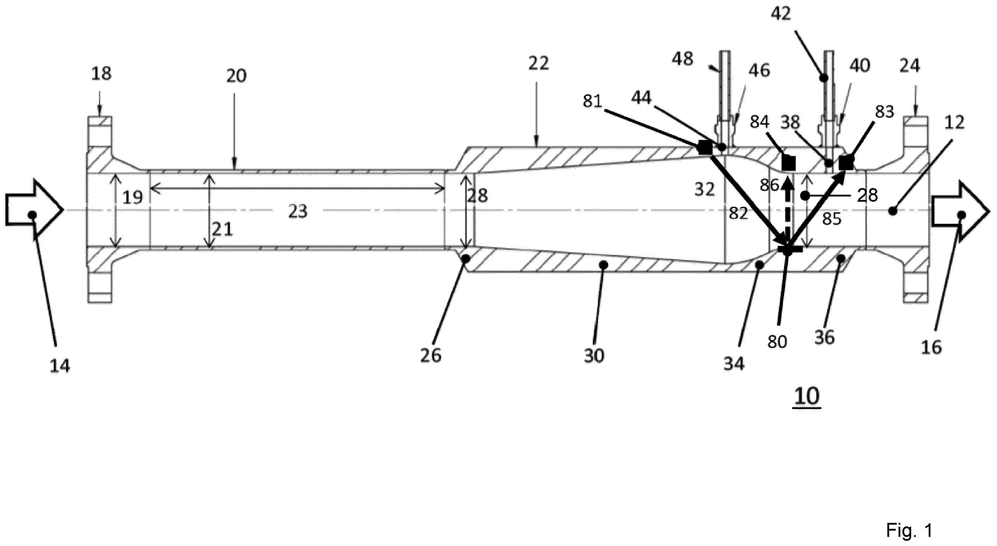

Fig. 1 zeigt eine Ausführungsform des erfindungsgemäßen Wirkdruckgebers 10 mit einem kreisförmigen Strömungsquerschnitt in einer Schnittansicht durch seine Längserstreckung. Daher sind im Folgenden die Innenmaße oder Rohrinnenmaße immer als Durchmesser bezeichnet. Dabei ist der Schnitt durch eine Mittelachse 12 des ersten Wirkdruckgebers 10 gelegt und eine Strömungsrichtung eines Fluids durch den ersten Wirkdruckgeber 10 durch einen Zuströmpfeil 14 und einen Abströmpfeil 16 angedeutet. In Strömungsrichtung gesehen strömt ein Fluid zunächst durch ein erstes Anschlusselement 18, das einen rohrinnenförmigen Innenbereich mit einem konstanten inneren Durchmesser 19 aufweist und im gezeigten Beispiel als Schraubflansch ausgestaltet ist. Hier sind jedoch eine Vielzahl von Anschlussmöglichkeiten denkbar, zum Beispiel ein Schweißflansch oder Klebeanschlusselement. Das erste Anschlusselement 18 ist stromabwärts mit einem ersten Ende eines Ausgleichsrohrs 20 verbunden, zum Beispiel verschweißt, das einen konstanten Rohrinnendurchmesser 21 und eine Ausgleichsrohrlänge 23 aufweist. Ein zweites Ende des Ausgleichsrohrs 20 ist mit einem Ende des Rohrkörpers 22 verbunden, dessen anderes Ende mit einem zweiten Anschlusselement 24 verbunden ist. Auch das zweite Anschlusselement 24 ist als Schraubflansch ausgestaltet, kann jedoch auch, wie das erste Anschlusselement 18, als anderes Anschlussstück ausgestaltet sein. Im gewählten Beispiel sind das erste Anschlusselement 18, das Ausgleichsrohr 20, der Rohrkörper 22 sowie das zweite Anschlusselement 24 aus einem Stahl gefertigt, vorzugsweise aus demselben Material, aus dem die Rohrleitung gefertigt ist, in den der Wirkdruckgeber 10 eingebaut ist. Die Materialwahl kann aber auch davon abhängig sein, welches Fluid durch den Wirkdruckgeber strömen soll, zum Beispiel ob dieses korrosiv ist oder mit Verschmutzung beladen ist, welche eine abrasive Wirkung hat. Dann ist ein Material zu wählen, das einen besonders niedrigen Verschleiß aufweist. Auf diese Weise ist erreicht, dass die innere Geometrie des Wirkdruckgebers 10 nur geringe Veränderungen während einer Betriebszeit aufweist.

Der Rohrkörper 22 ist in seiner Längserstreckung in verschiedene Abschnitte unterteilbar. Auf der Seite, auf der dem Rohrkörper 22 das Fluid zuströmt, befindet sich ein Zuströmabschnitt 26, der einen konstanten ersten Innendurchmesser 28 aufweist. Entsprechend dem ersten Innendurchmesser 28 weist der Zuströmabschnitt 26 einen ersten Strömungsquerschnitt auf.

Stromabwärts vom Zuströmabschnitt 26 folgt ein Diffusorabschnitt 30, dessen kreisförmiger Innendurchmesser in Strömungsrichtung gesehen kontinuierlich zunimmt, bis ein zweiter Innendurchmesser 32 erreicht ist. Korrespondierend zur Zunahme des Innendurchmessers im Diffusorabschnitt 30 erhöht sich der Strömungsquerschnitt für das Fluid vom ersten Strömungsquerschnitt kontinuierlich bis zu einem zweiten Strömungsquerschnitt, der am zweiten Innendurchmesser 32 erreicht ist. Der zweite Innendurchmesser 32 ist auch der maximale Innendurchmesser des Rohrkörpers. Dementsprechend ist die Geschwindigkeit des Mediums in Strömungsrichtung gesehen verlangsamt und dessen statischer Druckanteil an dieser Stelle erhöht im Vergleich zum Bereich des ersten Innendurchmessers 28. Stromabwärts des Diffusorabschnitts 28 weist der Rohrkörper 22 einen Konfusorabschnitt 34 auf, der auch Düsenabschnitt genannt wird, dessen Innendurchmesser sich kontinuierlich vom zweiten Innendurchmesser 32 wieder auf den ersten Innendurchmesser 28 verkleinert. Dementsprechend stellt sich in dem dem Konfusorabschnitt folgenden Abströmabschnitt 34 mit erstem Innendurchmesser 28 wiederum der erste Strömungsquerschnitt gleichen Strömungsgeschwindigkeiten wie beim Zuströmabschnitt 26 ein.

Im gewählten Beispiel beträgt das Verhältnis zwischen dem zweiten Innendurchmesser 32 und dem ersten Innendurchmesser 28 in etwa 1,4 und liegt damit innerhalb einer üblichen Spanne, die von 1,2 bis 2,5 reicht. Abhängig vom Fluid, der Strömungsgeschwindigkeit, dem Durchmesser der Rohrleitung, dem Betriebsdruck weiterer Randbedingungen kann dieses Verhältnis jedoch innerhalb der angegebenen Spanne variieren.

Um vorteilhafte Strömungsverhältnisse im Diffusorabschnitt 30 zu erhalten, ist es vorgesehen dass das Verhältnis von zweitem Innendurchmesser 32 und Länge des Diffusorabschnitts 30 in dessen Längserstreckung gesehen zwischen 0,3 und 0,5 ist.

Zudem hat sich herausgestellt, dass auch das Verhältnis zwischen der Länge des Diffusorabschnitts 30 und dem Konfusorabschnitt 34 einen Einfluss auf die Druckmessung hat. Als vorteilhaft hat sich erwiesen, wenn dieses Verhältnis zwischen 0,3 und 0,5 liegt.

Beispielsweise ergibt DN 100 Eingangsflansch 19 eine Nennweite von gerundet 100 mm am Eingang des Diffusors 28. Damit erreicht die größte Nennweite des Diffusors 28 an der Position 32 etwa 140 mm als Optimum. Laut der Offenlegungsschrift DE 10 2017 001 049 A1 kann die Nennweite erfindungsgemäß zwischen 120 und 250 mm liegen. Bleiben wir beim erfindungsgemäßen Optimum von 140 mm Nennweite an der Position 32. Das Verhältnis des Innendurchmessers an Position 32 zur Länge des Diffusorabschnittes 30 soll zwischen 0,3 und 0,5 liegen. Damit kann die optimale Länge des Diffusors 30 zwischen 280 und 467 mm schwanken.

Die Länge des Konfusorabschnittes 34 zur Länge des Diffusorabschnittes 30 soll ebenfalls vorzugsweise zwischen 0,3 und 0,5 liegen. Damit ist der Konfusor im Beipiel DN 100 Eingangsflansch vorzugsweise mit einer Länge zwischen gerundet 84 und 234 mm zu dimensionieren.

Im Abströmbereich 36 des Rohrkörpers 22 ist eine zweite Kopplungsausnehmung 44 als Bohrung durch den Rohrkörper 22 gezeigt. An der Außenseite der zweiten Kopplungsausnehmung 38 ist ein zweites Kopplungselement 40 angebracht, dessen Durchgangsbohrung einerseits mit der zweiten Kopplungsausnehmung 38 korrespondiert und andererseits ein Anschlusselement aufweist, das mit einer ersten Impulsleitung 42 bzw. Wirkdruckleitung eines in der Figur nicht dargestellten Druckmessgeräts oder Durchflussmesscomputers verbunden ist. Auf diese Weise ist es ermöglicht, dass die Druckmessung durch die Kopplungsausnehmung 38 unmittelbar an der inneren Mantelfläche des Rohrkörpers 22 im Abströmabschnitt 36 erfolgt. Als Druckaufnehmer für die Druckmessung kommen eine Vielzahl von Ausgestaltungen in Betracht, beispielsweise ein hydraulisches U-Rohr Manometer, ein Einzeldruckaufnehmer, ein Differenzdruckaufnehmer oder eine kombinierte Differenzdruckaufnehmer mit integrierter separater Druckmessung. Einen vergleichbaren Aufbau weist eine Druckmessstelle im Bereich des ersten Innendurchmessers 32 auf. Dort ist nämlich im Rohrkörper 22 eine erste Kupplungsausnehmung 44 angeordnet, über der ein erstes Kopplungselement 46 angebracht ist, dessen Durchgangsbohrung wiederum einerseits mit der ersten Kopplungsausnehmung 44 korrespondiert, andererseits ein weiteres Anschlusselement aufweist, an das eine zweite Impulsleitung 48 angeschlossen ist. Auch hier erfolgt eine unmittelbare Druckmessung des Drucks im Bereich des ersten Innendurchmessers 32, ohne dass die Zwischenschaltung eines sonst notwendigen Druckvergleichmäßigungselements, wie zum Beispiel eines Druckvergleichmäßigungsringraums, notwendig ist. Im Übrigen ist die Druckmessung an nur einer Stelle am Umfang des Rohrkörpers 22 im Bereich des ersten Innendurchmessers 32 bzw. im Abströmabschnitt 36 zur Messung oder Berechnung von Drücken oder Druckdifferenzen völlig ausreichend. Aus bestimmten verfahrenstechnischen Gründen ist es jedoch gegebenenfalls zweckmäßig, zusätzlich eine, zwei und/oder drei weitere Kopplungsausnehmungen über den Umfang des Rohrkörpers 22 an Stellen der ersten 38 bzw. zweiten Kopplungsausnehmung 44 anzuordnen. Auf diese Weise lässt sich besonders einfach eine messtechnische Redundanz von zum Beispiel 1 aus 2, 2 aus 3, 2 aus 4 oder 3 aus 4 Druckmessungen realisieren.

Einen weiteren wichtigen Einfluss auf die Strömung im Wirkdruckgeber 10 hat auch das Verhältnis der Länge des Ausgleichsrohrs 20 zu dessen Rohrdurchmesser 21, der dem zweiten Innendurchmesser 28 entspricht. Im gewählten Beispiel beträgt dieses Verhältnis in etwa 4,2 und liegt damit in einem Bereich, mit dem vorteilhafte Strömungsverhältnisse im Wirkdruckgeber 10 vorgebbar sind. Die minimale Länge des Ausgleichsrohrs 20 bei einem gegebenen Durchmesser sollte wenigstens das Verhältnis 2,5 aufweisen, damit sich für eine Druckmessung vorteilhafte Strömungsverhältnisse im Wirkdruckgeber einstellen. Dabei ist berücksichtigt, dass die Länge des ersten Anschlusselements 18 sowie die Länge des ersten Zuströmabschnitts 26 für die Wirkung auf die Strömungsverhältnisse im Wirkdruckgeber zu der Länge des Ausgleichsrohrs 20 hinzukommen. Üblicherweise wird damit das Verhältnis von der Länge insgesamt zum Rohrdurchmesser 21 den Wert von wenigstens 3 annehmen. Erst stromabwärts des Zuströmabschnitts 26 beginnt die Verzögerung der Fluidgeschwindigkeit durch die Vergrößerung des Innendurchmessers im Diffusorabschnitt 30.

Zur Ermittlung der Messgenauigkeit des Wirkdruckgebers nutzt die Erfindung das unterschiedliche Verhalten der gerichteten und diffusen Reflexion. Über die Kenntnis von Abrasion, Erosionen und Korrosion an der Innenoberfläche des Wirkdruckgebers 10 bzw. der Veränderung des dadurch bedingten Verschleißes lässt sich der verursachte systematische Messfehler bzw., korrekter gesagt, die systematische Messabweichung feststellen bzw. korrigieren. Systematische Messabweichungen lassen sich auf Prüfständen bewerten (quantifizieren). Dies kann auch vor dem Feldeinsatz experimentell erfasst werden und z.B. tabellarisch in der Auswerteelektronik des Wirkdruckgebers 10 hinterlegt werden. Die Tabelle dient dann dazu, das Messergebnis im Betrieb zu korrigieren. Hierzu wird ein Schwellenwert einer Sensorik im Wirkdruckgeber 10 während des Betriebs überwacht. Beim Erreichen des bzw. der Schwellenwertes werden die folgenden Messwerte automatisch korrigiert. Unter dem Schwellenwert werden zusätzliche Messabweichungen akzeptiert und vernachlässigt. Eine für das Medium transparente elektromagnetische Welle, bevorzugt ein Lichtsignal, wird auf eine Stelle im Wirkdruckgeber 10 gerichtet, an der die größte Erosion bzw. Korrosion erwartet wird. In der Regel ist dies die Stelle mit der höchsten Strömungsgeschwindigkeit am Ende des Konfuserabschnitts 34. Dieser Ort wird metallisch spiegelnd ausgeführt oder eine spiegelnde Oberfläche 80 ist an dieser Stelle angeordnet. Die Reflexion der Welle bzw. des Lichtstrahls an der spiegelnden Innenoberfläche lässt sich mit dem Reflexionsgesetz beschreiben (Einfallswinkel gleich Ausfallswinkel). Wird die spiegelnde Oberfläche 80 durch Abrasion, Erosion oder Korrosion rauer, geht die gerichtete Reflexion in die diffuse Reflexion über. Der Spiegel 80 bekommt dadurch viele Streuzentren, die in der Summe dazu führen, dass die Hauptrückstreuung unabhängig vom Reflexionsgesetz erfolgt. Sie erfolgt dann senkrecht zum Material. Die diffuse Streuung folgt dem Lambertschen Gesetz. Typische Beispiele einer diffusen Reflektion sind Lichtstreuungen an Medien wie Milch, Papier oder Wandfarbe. Licht, was auf diese Medien fällt, wird in alle Richtungen gestreut. Z. B. sieht für einen Betrachter ein beleuchtetes Stück weißes Paper aus allen Richtungen nahezu gleich hell aus. Die reflektierende Fläche bzw. der Spiegel 80 lässt sich beispielsweise mit einer Flächenbeschichtung ausführen. Vorteile sind, dass die Erosion bzw. Korrosion gezielt auf das strömende Medium bzw. auf Begleitstoffe abgestimmt werden kann. So könnte auch ausfallende Feuchtigkeit die Beschichtung trüben, so dass der Übergang von gerichteter zu diffuser Reflexion zielgerichteter und/oder schneller erfolgt.

Die Erfindung nutzt somit den Übergang der gerichteten zur diffusen Streuung. Hierzu wird eine Lichtquelle 81, idealerweise eine Leuchtdiode, so in den Wirkdruckgeber eingebaut, dass er einen gerichteten Strahl 82 auf die Stelle setzt, an der die höchste Erosion bzw. Korrosion zu erwarten ist. Fertigungsbedingt verhält sich die Oberfläche an der Stelle, auf die der Lichtstrahl trifft, wie ein Spiegel. Die gerichtete Reflexion 85 wird durch eine Fotozelle 83 aufgefangen. Ihre Position berechnet sich nach dem Reflexionsgesetz. Zusätzlich wird senkrecht über der reflektierenden Oberfläche eine zweite Fotozelle 84 angeordnet. Diese Richtung entspricht der Hauptrückstreuung 86 der diffusen Reflexion. Im Neuzustand der reflektierenden Fläche 80 wird der Lichtstrahl 82 von der ersten Fotozelle 83 nahezu vollständig detektiert. Die zweite Fotozelle 84 empfängt so gut wie keinen Anteil, der von der Oberfläche 80 gestreuten Lichtwelle. Im Laufe des Betriebs wird die reflektierende Oberfläche 80 rauer, die gerichtete Reflexion 85 geht zunehmend in die diffuse Reflexion 86 über. Das wird über die zweite Fotozelle 84 detektiert, deren Signal wird zu Lasten des Lichteinfalls in die erste Fotozelle 83 größer. Das Verhältnis der Lichtausbeute der ersten und zweiten Fotozelle 83 und 84 kann konsequenterweise in den Zusammenhang gebracht werden. Damit erhält der Wirkdruckgeber 10 einen Wert, um zulässige bzw. unzulässige Verschleißwerte festzustellen bzw. bei hinterlegter Prüfstandsinformation zu dem Zusammenhang zwischen Verschleißfortschritt und Messabweichung (Messfehler) bzw. Größe der Messgenauigkeit automatisch zu korrigieren. Diese Einrichtung lässt sich beispielsweise über eine EU-Baumusterprüfbescheinigung nach Messgeräterichtlinie und Kalibrierung bzw. Eichung auf akkreditierten Prüfständen im geschäftlichen wie amtlichen Verkehr zur Kompensation von Messungenauigkeiten einsetzen. Soll der Wirkdruckgeber so ausgeführt werden, dass auch der Einfluss von Kontaminationen z.B. durch Öle an der Innenwandung des Messgerätes miterfasst werden, empfiehlt sich der Aufbau der spiegelnden Fläche 80 an der tiefsten Stelle. Grundsätzlich kann die spiegelnde Fläche aber auch an weiteren Positionen angebracht werden. Die gesamte sensorische Einrichtung würde dann bildlich gesprochen rotationssymetrisch gedreht und positioniert werden. Eine mögliche konstruktionsbedingte Krümmung der Spiegelposition ist für die Reflexion unerheblich. Gerichtete Reflexionen treten auch an Hohlspiegeln wie z.B. einem Rasierspiegel oder astronomischen Spiegelteleskopen oder auch an konvex gekrümmten Außenspiegeln von PKW, also auch einer spiegelnden metallischen Oberfläche an der Innenwandung des erfindungsgemäßen Wirkdruckgebers 10 auf. Die Festlegung des Ein- bzw. gleich großen Ausfallwinkels des Lichtstrahls sollte bevorzugt so gewählt werden, dass im Ausgangszustand möglichst wenig Streulicht der gerichteten Reflexion in die zweite Fotozelle 84 fällt. Dies bedeutet, die Winkel möglichst groß zu wählen. Die Winkel werden konstruktiv durch die maximale Länge des Abströmbereichs 36 begrenzt und ergeben sich dann rein rechnerisch aus dem Kotangens des Verhältnisses aus der Länge und dem Durchmesser des Abströmbereichs 36. Analytisch ergibt sich die Beziehung:

$$\tan(Ausfallwinkel) = \frac{L\ddot{a}nge\ des\ Abstr\ddot{o}mabschnittes\ 36}{Nennweite\ des\ Anschlusselements\ 24}$$

Die sinnvolle maximale Länge des Abströmabschnittes 36 ergibt sich aus der bidirektionalen Variante des Wirkdruckgebers. In diesem Fall entspricht die Länge des Abströmabschnittes 36 der Länge des Ausgleichrohres 23. Laut Hauptanspruch 1 der Offenlegungsschrift DE 10 2017 001 049 A1 beträgt die Ausgleichrohrlänge 23 wenigstens das 2,5-fache des Rohrinnenmaßes des Ausgleichrohres 20. Im obigen Beispiel mit DN 100 Eingangsflansch 19 beträgt die Länge des Abströmabschnittes 23 dann etwa maximal 250 mm und mit dem Reflexionsgesetz der Ausgangswinkel etwa 68 °. Erfahrungsgemäß sollte er wenigstens 30 ° betragen, um gerichtete Reflexion von diffuser Reflexion hinreichend unterscheiden zu können.

Grundsätzlich lässt sich die Verschleißbestimmung mit nur einer Fotozelle entweder 83 oder 84 bestimmen. Die Schwächung des Signals der Fotozelle 83 bzw. die stärker werdende Lichtausbeute der Fotozelle 84 bis zu den Schwellenwerten reicht prinzipiell zum Zwecke der Verschleißbestimmung aus. Es sei aber hier angemerkt, dass die Nutzung der beiden Signale der Fotozellen 83 und 84 die Zuverlässigkeit der Verschleißbestimmung signifikant erhöhen und Fehlmessungen z.B. durch Schwächung der Lichtausbeute bei Verschmutzung des Spiegels ausschließen. Erfindungsgemäß kann dies z.B. durch eine Verhältnisbildung der Lichtausbeute beider Fotozellen erfolgen. Bei der Verschmutzung der spiegelnden Fläche bleibt das Verhältnis gleich. Würde nur die Lichtausbeute z.B. der Fotozelle 83 ausgewertet, könnte die geringere Lichtausbeute durch Verschmutzung allein zur Erreichung des Schwellenwertes führen. Dies würde sich unabhängig vom Vorliegen eines Verschleißes einstellen. Ein Fehlalarm wäre die Folge, den es zu vermeiden gilt.

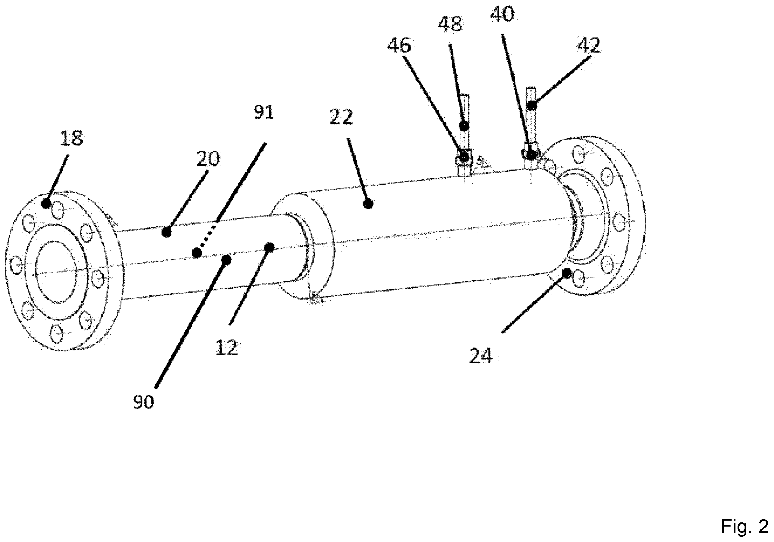

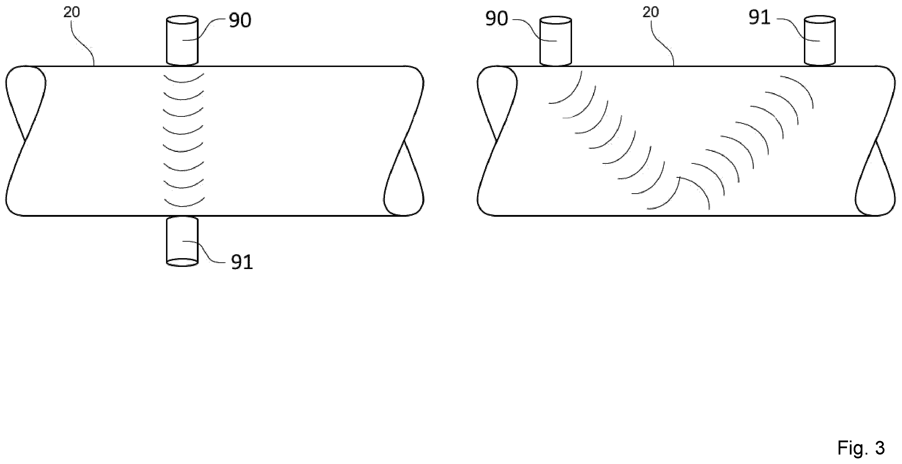

Fig. 2 und 3 zeigen einen Wirkdruckgeber 10, der zulaufseitig in einem Ausgleichsrohr 20 zwischen erstem Anschlusselement 18 und dem Diffusorabschnitt 30 einen Ultraschalltransmitter 90 und einen Ultraschallempfänger 91 aufweist. Das Ultraschallsensorpaar 90,91 wird im Ausgleichsrohr 20 so positioniert, dass der ausgesandte Ultraschallimpuls vom ersten durch das Medium zum zweiten empfangenden Ultraschallsensor läuft. Der erforderliche Transmitter bzw. Messumformer kann in die Elektronik des Wirkdruckgebers integriert bzw. mit der Auswerteeinheit verbunden werden.

Um Verschleiß, Verschmutzungen, und Ablagerungen zu vermeiden, sitzen die Sensoren 90, 91 bevorzugt in der 3 und 9-Uhr-Position des Ausgleichsrohrs 20. Des Weiteren sitzen die Sensoren etwas vertieft in der Wandung des Ausgleichsrohrs 20 dergestalt, dass ein hinreichend starker Ultraschallimpuls in das Ausgleichsrohr 20 abgegeben werden kann und Erosionen des Sensors durch die Strömung minimiert werden. Der Impuls des aussenden Sensors kann direkt zum Empfänger in der 9-Uhr-Position gestrahlt werden. Grundsätzlich kann das akustische Signal aber auch an der Innenwandung des Ausgleichsrohrs reflektiert und zu einem Empfänger stromab in 3-Uhr Position gestrahlt werden. Die Laufzeit ergibt sich in allen Fällen aus dem Zeitpunkt des Eingangs des akustischen Signals abzüglich des Zeitpunktes des ausgesandten Signals.

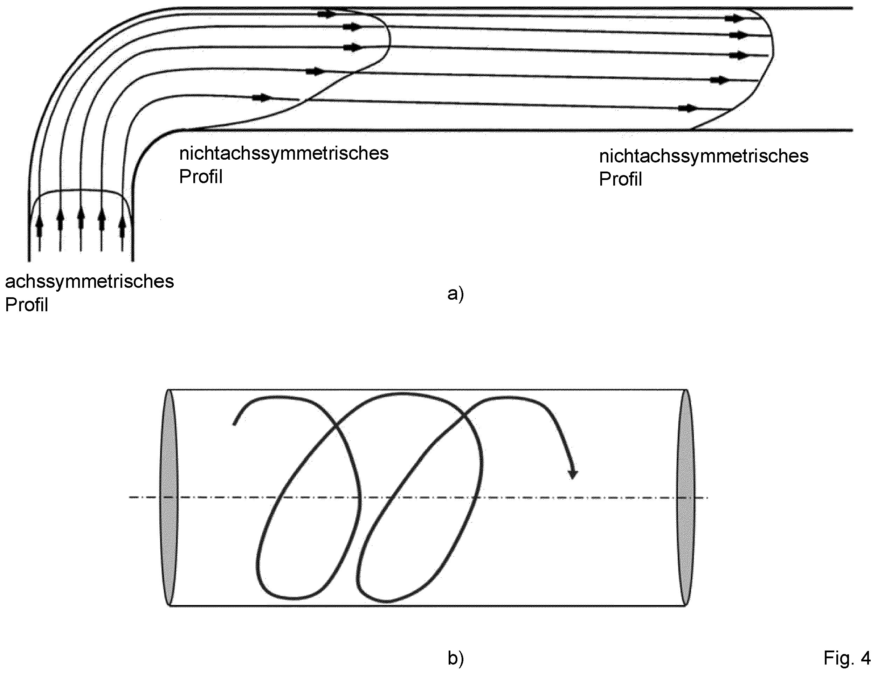

Fig. 4a und 4b zeigen zum einen eine beispielhafte Ansicht eines nicht achssymmetrischen Strömungsprofils und Fig. 4b zum anderen eine beispielhafte Darstellung einer Drall aufweisenden Strömung, welche durch einen wie in Fig. 4a gezeigten Rohrverlauf verursacht werden kann. Denn durch Rohrbögen, Ventile und andere Rohreinbauten entstehen Einlaufstörungen vor der Messstelle. Bei einem einfachen Rohrbogen verändert sich ein symmetrisches Durchflussprofil in ein nichtachssymmetrisches Profil, siehe Fig. 4a.

Bei mehrfachen Einlaufstörungen kann auch ein Drall entstehen, der je nach Geschwindigkeit seine Profilausbildung ändern kann, wie in Fig. 4b dargestellt.

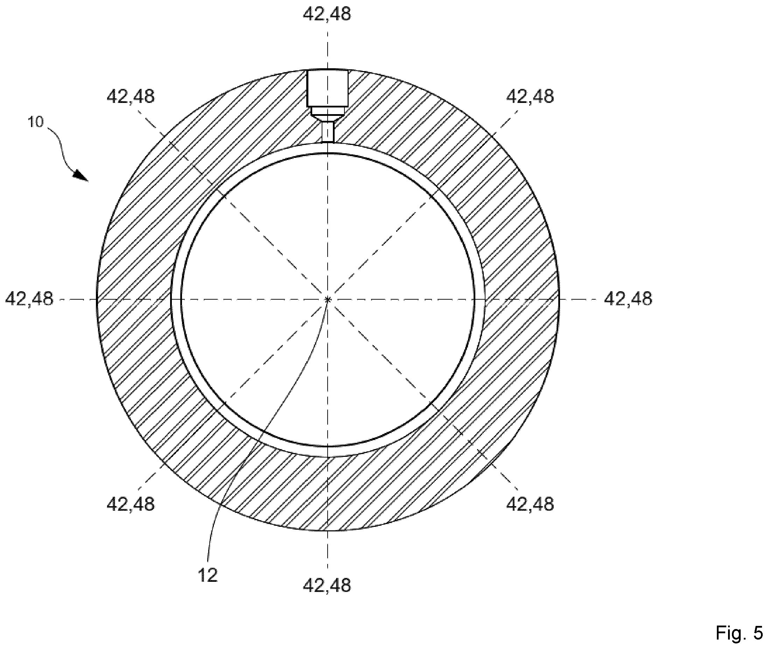

Fig. 5 zeigt eine Anordnung, mittels welcher vor der Messstelle vorhandene Einlaufstörungen aus dem Messergebnis herausgerechnet werden können. Die Ansicht zeigt die Positionierung der Messaufnehmer 42, 48 zur Erfassung der Wirkdruckmessung über den Umfang des Rohres. Die Anordnung von zwei oder mehr Messaufnehmern 42, 48 verteilt über den Umfang des Messrohres führt zu einer dynamischen Messwertaufnahme über mehrere Pfade.

Dies ist eine Hauptursache für Messungenauigkeiten bei Wirkdruckmessungen

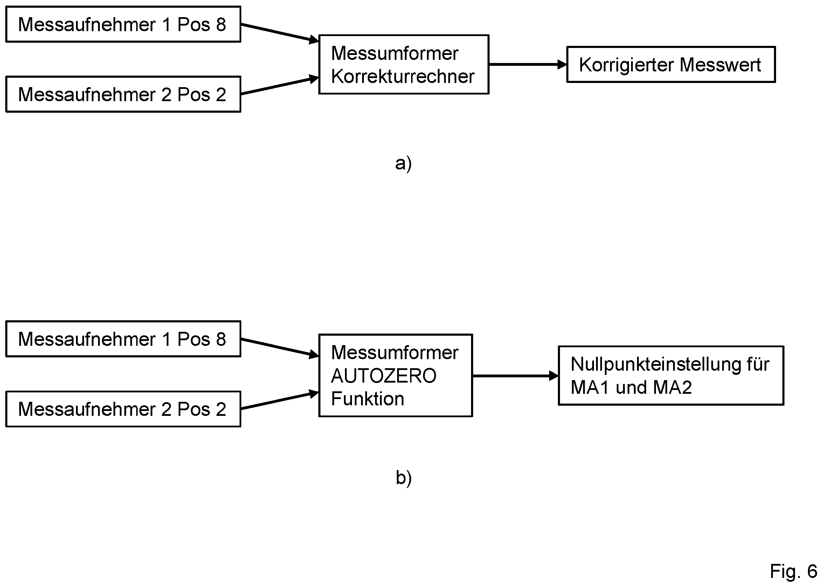

Das mittels der Anordnung generierte Datenfeld wird anschließend zur dynamischen Anpassung der Messwertkorrektur ausgewertet und verifiziert damit die Messgenauigkeit, wie in Fig. 6a dargestellt ist

Durch die Nutzung von zwei oder mehr Messaufnehmern 42, 48 kann außerdem die automatische Nullpunktkorrektur in ihrem Ablauf verifiziert werden. Im Stand der Technik erfolgt eine Nullpunktkorrektur des Differenzdrucktransmitters im eingebauten Zustand durch Trennung vom Prozess und die Öffnung der Ausgleichsleitung über den manuellen Ventilblock. Mit der vorgeschlagenen Anordnung, welche zwei oder mehr Messaufnehmer bzw. Drucksensoren aufweist, kann diese Korrektur einfach bei Stillstand des Prozessfluids erfolgen. Dabei überwacht ein Sensor während der Nullpunktkorrektur des anderen Sensors, ob sich das Prozessfluid bewegt. Ein manueller Eingriff ist dabei nicht mehr nötig. Fig. 6b zeigt beispielhaft ein entsprechendes Vorgehen.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen der Erfindung von Bedeutung sein.

**Patentansprüche**

1.  Wirkdruckgeber (10) zur Messung von Strömungen gasförmiger und flüssiger Fluide, insbesondere Brenngase wie Erdgase, Biogase, wasserstoffhaltige Brenngase und H2, gasförmiges, flüssiges und dichtes, beispielsweise überkritisches Kohlenstoffdioxid oder Dampf,

    mit einem Rohrkörper (22), welcher zwischen einem ersten (18) und einem zweiten Anschlusselement (24) angeordnet ist, wobei es vorgesehen ist, dass ein Fluid durch das erste Anschlusselement (18) dem Rohrkörper (22) zuströmt und durch das zweite Anschlusselement (24) abströmt, wobei der Rohrkörper (22) einen ersten Abschnitt mit einem ersten Durchmesser und stromabwärts davon angeordnet einen zweiten Abschnitt mit einem zweiten in Strömungsrichtung kleiner werdenden Durchmesser aufweist, welcher kleiner ist als der größte Durchmesser im ersten Abschnitt, wobei im ersten Abschnitt eine erste Druckmesseinrichtung (48) und im zweiten Abschnitt eine zweite Druckmesseinrichtung (42) angeordnet sind, wobei mittels der Druckmesseinrichtungen (42, 48) ein Differenzdruck zwischen erstem und zweitem Abschnitt bestimmbar ist, wobei im Rohrkörper (22) ferner eine Quelle (81) zum Aussenden elektromagnetischer Strahlung, beispielsweise gebündelten Lichts, sowie zumindest eine Fotozelle (83, 84) angeordnet sind, wobei der Wirkdruckgeber (10) ferner eine Auswerteeinheit aufweist, mittels welcher eine Abnahme und/oder Zunahme der seitens der Fotozelle (83, 84) detektierten Strahlungsintensität bestimmbar ist, **dadurch gekennzeichnet, dass** der Rohrkörper (22) einen ersten Abschnitt mit einem ersten in Strömungsrichtung größer werdenden Durchmesser aufweist, und dass im Rohrkörper (22) eine reflektierende Fläche (80) angeordnet ist, welche so zu der Quelle (81) und der Fotozelle (83, 84) ausgerichtet ist, dass die von der Quelle (81) ausgesendete Strahlung (82) auf die reflektierende Fläche (80) fällt und von dieser gerichtet (85) oder diffus (86) auf die Fotozelle (83, 84) reflektiert wird.

2.  Wirkdruckgeber (10) nach Anspruch 1, bei dem die zumindest eine Fotozelle (83) bezogen auf die reflektierende Fläche (80) symmetrisch zur Quelle (81) angeordnet ist, so dass der von der reflektierenden Fläche (80) reflektierte gerichtete Strahl auf die Fotozelle (83) trifft, wobei mittels der Auswerteeinheit ein Unterschreiten eines vorbestimmten Schwellenwerts der seitens der Fotozelle (83) detektierten Strahlungsintensität erfasst wird.

3.  Wirkdruckgeber (10) nach Anspruch 1 oder 2, bei dem die zumindest eine Fotozelle (84) senkrecht gegenüber der reflektierenden Fläche (80) angeordnet ist, so dass die Hauptrückstreuung (86) der von der reflektierenden Fläche (80) reflektierten diffusen Reflexion auf die Fotozelle (84) trifft, wobei mittels der Auswerteeinheit ein Überschreiten eines vorbestimmten Schwellenwerts der seitens der Fotozelle (84) detektierten Strahlungsintensität erfasst wird.

4.  Wirkdruckgeber (10) nach einem der vorangehenden Ansprüche, bei dem die reflektierende Fläche (80) zwischen der ersten und der zweiten Druckmesseinrichtung angeordnet ist.

5. Wirkdruckgeber (10) nach einem der vorangehenden Ansprüche, bei dem die reflektierende Fläche (80) bezogen auf den Rohrumfang an einem gravitatorischen Tiefstpunkt des Rohrkörpers (22) angeordnet ist.

6. Wirkdruckgeber (10) nach einem der vorangehenden Ansprüche, wobei die reflektierende Fläche (10) im Rohrkörper (22) bezogen auf die Strömungsrichtung an der Stelle mit der höchsten Strömungsgeschwindigkeit, beispielsweise im zweiten Abschnitt mit gegenüber dem ersten Abschnitt verringertem Durchmesser, angeordnet ist.

7. Wirkdruckgeber (10) nach einem der vorangehenden Ansprüche, bei dem die Quelle (81) elektromagnetischer Strahlung stromaufwärts der ersten Druckmesseinrichtung angeordnet ist.

8. Wirkdruckgeber (10) nach einem der vorangehenden Ansprüche, bei dem die zumindest eine Fotozelle (83) stromabwärts der zweiten Druckmesseinrichtung (42) angeordnet ist.

9. Wirkdruckgeber (10) nach einem der vorangehenden Ansprüche, wobei bei Über-und/oder Unterschreiten eines vorbestimmten Schwellenwerts der seitens der Fotozelle (83, 84) detektierten Strahlungsintensität eine vorbestimmte Korrektur der seitens des Wirkdruckgebers (10) ermittelten Druckdifferenz bzw. der bestimmten Durchflussmenge vorgenommen wird.

10. Wirkdruckgeber (10) nach einem der vorangehenden Ansprüche, wobei die reflektierende Fläche (80) eine Beschichtung aufweist, welche dazu eingerichtet ist, den Einfluss eines spezifischen Begleitstoffes wie Kondensate, wie z.B. Feuchtigkeit, auf die Messgenauigkeit bestimmen zu können.

11. Wirkdruckgeber (10) nach einem der vorangehenden Ansprüche, welcher im Ausgleichsrohr oder im Zuströmabschnitt (20) oder davor radial über den Rohrumfang verteilt eine Mehrzahl Drucksensoren zum Erfassen des örtlichen Fluiddrucks aufweist, welche mit der Auswerteeinheit verbunden sind, wobei die Auswerteeinheit dazu eingerichtet ist, anhand der mittels der Mehrzahl der Drucksensoren ermittelten Druckdifferenzen den Drall oder Verwirbelungen des einströmenden Fluids zu erfassen bzw. das Messergebnis entsprechend zu kompensieren.

12. Wirkdruckgeber (10) nach einem der vorangehenden Ansprüche, wobei in einem Zuströmabschnitt (20) zwischen dem ersten Anschlusselement (18) und dem ersten Abschnitt oder einem Abströmabschnitt (36) zwischen dem zweiten Abschnitt und dem zweiten Anschlusselement (20) des Wirkdruckgebers (10) eine Messeinrichtung zum Ermitteln von Dichteschwankungen des Prozessfluids angeordnet ist, welche einen Ultraschalltransmitter (90) und einen Ultraschallempfänger (91) umfasst, welche so zueinander ausgerichtet sind, dass ein seitens des Ultraschalltransmitters (90) durch das Prozessfluid ausgesendeter Ultraschallimpuls seitens des Ultraschallempfängers (91) empfangen werden kann, wobei die Messeinrichtung mit der Auswerteeinheit verbunden ist, welche dazu eingerichtet ist, anhand von Laufzeitveränderungen der ausgesendeten Ultraschallimpulse Dichteschwankungen im Prozessfluid zu erkennen.

13. Wirkdruckgeber (10) nach Anspruch 12, wobei der Ultraschalltransmitter (90) und der Ultraschallempfänger (91) gegenüberliegend angeordnet sind und sich bezogen auf den Rohrumfang jeweils außerhalb des gravitatorischen Tiefstpunkt des Rohrkörpers (22) befinden.

14. Wirkdruckgeber (10) nach Anspruch 12 oder 13, wobei der Ultraschalltransmitter und der Ultraschallempfänger vertieft in die Wandung des Rohrkörpers (22) eingelassen sind.

15. Verfahren zur Bestimmung der Messgenauigkeit eines Wirkdruckgebers (10) nach einem der vorangehenden Ansprüche, umfassend die Schritte:

- Durchleiten eines Prozessfluids durch den Wirkdruckgeber (10);
- Bestimmen eines ersten Drucks in einem ersten Abschnitt eines Rohrkörpers (22) des Wirkdruckgebers (10) und Bestimmen eines zweiten Drucks in einem zweiten Abschnitt des Rohrkörpers (22), wobei der Innendurchmesser (32, 28) des Rohrkörpers (22) im ersten Abschnitt größer ist als im zweiten Abschnitt;
- Ermitteln der Druckdifferenz zwischen erstem und zweitem Druck und Bestimmen einer Durchflussmenge des durchgeleiteten Prozessfluids;
- Aussenden einer elektromagnetischen Welle (82) von einer an oder in einer Innenwand des Rohrkörpers (22) angeordneten Quelle (81) auf eine reflektierende Fläche (80), welche auf einem der Quelle (81) gegenüberliegenden Innenwandabschnitt des Rohrkörpers (22) angeordnet ist, wobei die elektromagnetische Welle (82) nicht senkrecht auf die reflektierende Fläche (80) trifft;

- Gerichtetes Reflektieren (85) der elektromagnetischen Welle (82) von der reflektierenden Fläche (80) auf eine der reflektierenden Fläche (80) schräg gegenüberliegenden Fotozelle (83) und/oder diffuses Reflektieren (86) auf eine der reflektierenden Fläche (80) senkrecht gegenüberliegenden Fotozelle (84);
- Bestimmen einer Abnahme der mittels der schräg gegenüberliegenden Fotozelle (83) detektierten Strahlungsintensität und/oder Bestimmen einer Zunahme der mittels der senkrecht gegenüberliegenden Fotozelle (84) detektierten Strahlungsintensität;
- Vornehmen einer vorbestimmten Korrektur der seitens des Wirkdruckgebers ermittelten Druckdifferenz bei Über- und/oder Unterschreiten eines vorbestimmten Schwellenwerts der seitens der Fotozelle (83, 84) detektierten Strahlungsintensität.

## Claims

1. An differential pressure transducer (10) for measuring flows of gaseous and liquid fluids, in particular combustion gases such as natural gases, biogases, hydrogen-containing combustion gases and H2, gaseous, liquid and dense, for example supercritical carbon dioxide or steam,

   with a pipe body (22) which is arranged between a first (18) and a second connection element (24), wherein it is provided that a fluid flows through the first connection element (18) to the pipe body (22) and flows out through the second connection element (24), wherein the pipe body (22) has a first section with a first diameter and, arranged downstream thereof, a second section with a second diameter which becomes smaller in the flow direction and which is smaller than the largest diameter in the first section, wherein a first pressure measuring device (48) is arranged in the first section and a second pressure measuring device (42) is arranged in the second section, wherein a differential pressure between the first and second section can be determined by means of the pressure measuring devices (42, 48),
   wherein a source (81) for emitting electromagnetic radiation, for example collimated light, and at least one photocell (83, 84) are further arranged in the pipe body (22), wherein the differential pressure transducer (10) further comprises an evaluation unit by means of which a decrease and/or increase in the radiation intensity detected by the photocell (83, 84) can be determined,
   **characterized in that** the pipe body (22) has a first section with a first diameter which becomes larger in the flow direction, and **in that** a reflecting surface (80) is arranged in the pipe body (22), which is oriented with respect to the source (81) and the photocell (83, 84) such that the radiation (82) emitted by the source (81) impinges on the reflecting surface (80) and is reflected by the latter in a directed (85) or diffuse (86) manner onto the photocell (83, 84).

2. Differential pressure transducer (10) according to claim 1, in which the at least one photocell (83), in relation to the reflecting surface (80), is arranged symmetrically with respect to the source (81) such that the directed beam reflected by the reflecting surface (80) impinges on the photocell (83), wherein the radiation intensity detected by the photocell (83) falling below a predetermined threshold value is determined by means of the evaluation unit.

3. Differential pressure transducer (10) according to claim 1 or 2, in which the at least one photocell (84) is arranged perpendicularly opposite the reflecting surface (80) such that the main backscatter (86) of the diffuse reflection reflected by the reflecting surface (80) impinges on the photocell (84), wherein the radiation intensity detected by the photocell (84) exceeding a predetermined threshold value is determined by means of the evaluation unit.

4. Differential pressure transducer (10) according to one of the preceding claims, in which the reflecting surface (80) is arranged between the first and the second pressure measuring device.

5. Differential pressure transducer (10) according to one of the preceding claims, in which the reflecting surface (80) is arranged at a gravitational lowest point of the pipe body (22) with respect to the pipe circumference.

6. Differential pressure transducer (10) according to one of the preceding claims, wherein the reflecting surface (10) is arranged in the pipe body (22) at the point with the highest flow velocity with respect to the flow direction, for example in the second section with a diameter which is reduced with respect to the first section.

7. Differential pressure transducer (10) according to one of the preceding claims, in which the source (81) of electromagnetic radiation is arranged upstream of the first pressure measuring device.

8. Differential pressure transducer (10) according to one of the preceding claims, in which the at least one photocell (83) is arranged downstream of the second pressure measuring device (42).

9. Differential pressure transducer (10) according to one of the preceding claims, wherein, when the radiation intensity detected by the photocell (83, 84) exceeds and/or falls below a predetermined threshold value, a predetermined correction of the pressure difference determined by the differential pressure transducer (10) or of the determined flow rate is carried out.

10. Differential pressure transducer (10) according to one of the preceding claims, wherein the reflecting surface (80) has a coating which is configured to be able to determine the influence of a specific accompanying substance such as condensates, such as, for example, moisture, on the measurement accuracy.

11. Differential pressure transducer (10) according to one of the preceding claims, which has, in the compensation pipe or in the inflow section (20) or upstream thereof, distributed radially over the pipe circumference, a plurality of pressure sensors for detecting the local fluid pressure, which pressure sensors are connected to the evaluation unit, wherein the evaluation unit is configured to detect the swirl or vortices of the inflowing fluid on the basis of the pressure differences determined by means of the plurality of pressure sensors or to compensate the measurement result accordingly.

12. Differential pressure transducer (10) according to one of the preceding claims, wherein a measuring device for determining density fluctuations of the process fluid is arranged in an inflow section (20) between the first connection element (18) and the first section or in an outflow section (36) between the second section and the second connection element (20) of the differential pressure transducer (10), which measuring device comprises an ultrasonic transmitter (90) and an ultrasonic receiver (91) which are oriented with respect to one another such that an ultrasonic pulse emitted through the process fluid by the ultrasonic transmitter (90) can be received by the ultrasonic receiver (91), wherein the measuring device is connected to the evaluation unit which is configured to detect density fluctuations in the process fluid on the basis of transit time changes of the emitted ultrasonic pulses.

13. Differential pressure transducer (10) according to claim 12, wherein the ultrasonic transmitter (90) and the ultrasonic receiver (91) are arranged opposite one another and are each located outside the gravitational lowest point of the pipe body (22) with respect to the pipe circumference.

14. Differential pressure transducer (10) according to claim 12 or 13, wherein the ultrasonic transmitter and the ultrasonic receiver are recessed into the wall of the pipe body (22).

15. Method for determining the measurement accuracy of a differential pressure transducer (10) according to one of the preceding claims, comprising the steps:

   - passing a process fluid through the differential pressure transducer (10);
   - determining a first pressure in a first section of a pipe body (22) of the differential pressure transducer (10) and determining a second pressure in a second section of the pipe body (22), wherein the inner diameter (32, 28) of the pipe body (22) is larger in the first section than in the second section;
   - determining the pressure difference between the first and second pressures and determining a flow rate of the process fluid passed through;
   - emitting an electromagnetic wave (82) from a source (81) arranged on or in an inner wall of the pipe body (22) onto a reflecting surface (80) which is arranged on an inner wall section of the pipe body (22) opposite the source (81), wherein the electromagnetic wave (82) does not impinge perpendicularly on the reflecting surface (80);
   - directly reflecting (85) the electromagnetic wave (82) from the reflecting surface (80) onto a photocell (83) obliquely opposite the reflecting surface (80) and/or diffusely reflecting (86) onto a photocell (84) perpendicularly opposite the reflecting surface (80);
   - determining a decrease in the radiation intensity detected by the obliquely opposite photocell (83) and/or determining an increase in the radiation intensity detected by the perpendicularly opposite photocell (84);
   - carrying out a predetermined correction of the pressure difference determined by the differential pressure transducer when the radiation intensity detected by the photocell (83, 84) exceeds and/or falls below a predetermined threshold value.

**Revendications**

1. Transmetteur de pression active (10), destiné à mesurer des courants de fluides gazeux et liquides, notamment de gaz de combustion, tels que des gaz naturels, des biogaz, des gaz naturels hydrogénés et du H2, un dioxyde de carbone gazeux, liquide et dense, par exemple supercritique ou de la vapeur,

   doté d'un corps tubulaire (22), lequel est placé entre un premier (18) et un deuxième élément de raccord (24), étant prévu qu'un fluide afflue à travers le premier élément de raccord (18) vers le corps tubulaire (22) et s'évacue à travers le deuxième élément de raccord (24), le corps tubulaire (22) comportant un premier tronçon avec un premier diamètre et placé en aval de ce dernier, un deuxième tronçon avec un deuxième diamètre décroissant dans la direction d'écoulement, lequel est inférieur au plus grand diamètre dans le premier tronçon, dans le premier tronçon étant placé un premier système de manomètre (48) et dans le deuxième tronçon étant placé un deuxième système de manomètre (42), au moyen des systèmes de manomètres (42, 48) pouvant être déterminée une pression différentielle entre le premier et le deuxième tronçon,
   dans le corps tubulaire (22) étant placées par ailleurs une source (81), destinée à émettre un rayonnement électromagnétique, par exemple une lumière concentrée, ainsi qu'au moins une cellule photoélectrique (83, 84), le transmetteur de pression active (10) comportant par ailleurs une unité d'évaluation, à l'aide de laquelle une diminution et / ou une augmentation de l'intensité de rayonnement détectée par la cellule photoélectrique (83, 84) peut être déterminée,
   **caractérisé en ce que** le corps tubulaire (22) comporte un premier tronçon, avec un diamètre croissant dans la direction d'écoulement et **en ce que** dans le corps tubulaire (22) est placée une surface réfléchissante (80), laquelle est orientée vers la source (81) et vers la cellule photoélectrique (83, 84) de telle sorte que le rayonnement (82) émis par la source (81) soit incident sur la surface réfléchissante (80) et soit réfléchi par celle-ci, de manière dirigée (85) ou diffuse (86) sur la cellule photoélectrique (83, 84).

2. Transmetteur de pression active (10) selon la revendication 1, sur lequel l'au moins une cellule photoélectrique (83) est placée en rapport à la surface réfléchissante (80) de manière symétrique à la source (81), de sorte que le rayon dirigé, réfléchi par la surface réfléchissante (80) soit incident sur la cellule photoélectrique (83), au moyen de l'unité d'évaluation, une non-atteinte de la valeur seuil détectée par la cellule photoélectrique (83) étant capturée.

3. Transmetteur de pression active (10) selon la revendication 1 ou 2, sur lequel l'au moins une cellule photoélectrique (84) est placée à la perpendiculaire au regard de la surface réfléchissante (80), de telle sorte que la rétrodiffusion principale (86) de la réflexion diffuse réfléchie par la surface réfléchissante (80) soit incidente sur la cellule photoélectrique (84), au moyen de l'unité d'évaluation, un dépassement d'une valeur seuil prédéfinie de l'intensité de rayonnement détecté par la cellule photoélectrique (84) étant capturée.

4. Transmetteur de pression active (10) selon l'une quelconque des revendications précédentes, sur lequel la surface réfléchissante (80) est placée entre le premier et le deuxième systèmes de manomètres.

5. Transmetteur de pression active (10) selon l'une quelconque des revendications précédentes, sur lequel la surface réfléchissante (80) est placée en rapport à la circonférence du tube sur un point de gravitation le plus bas du corps tubulaire (22).

6. Transmetteur de pression active (10) selon l'une quelconque des revendications précédentes, la surface réfléchissante (10) étant placée dans le corps tubulaire (22), en rapport de la direction d'écoulement sur l'endroit présentant la vitesse d'écoulement la plus élevée, par exemple dans le deuxième tronçon présentant un diamètre réduit au regard du premier tronçon.

7. Transmetteur de pression active (10) selon l'une quelconque des revendications précédentes, sur lequel la source (81) de rayonnement électromagnétique est placée en amont du premier système de manomètre.

8. Transmetteur de pression active (10) selon l'une quelconque des revendications précédentes, sur lequel l'au moins une cellule photoélectrique (83) est placée en amont du deuxième système de manomètre (42).

9. Transmetteur de pression active (10) selon l'une quelconque des revendications précédentes, sur lequel lors d'un dépassement et / ou d'une non-atteinte d'une valeur seuil prédéfinie de l'intensité de rayonnement détectée par la cellule photoélectrique (83, 84), il est procédé à une correction prédéfinie de la pression différentielle recherchée de la part du transmetteur de pression active (10) ou du débit déterminé.

**10.** Transmetteur de pression active (10) selon l'une quelconque des revendications précédentes, la surface réfléchissante (80) comportant un revêtement, lequel est configuré pour pouvoir déterminer l'influence sur la précision de mesure d'une substance secondaire spécifique, telle que des produits de condensation, par exemple de l'humidité.

**11.** Transmetteur de pression active (10) selon l'une quelconque des revendications précédentes, lequel comporte dans le tube de compensation ou dans le tronçon d'afflux (20) ou avant celui-ci dans la direction radiale, en distribution sur la circonférence du tube une pluralité de capteurs de pression, destinés à capturer le pression locale du fluide, lesquels sont connectés avec l'unité d'évaluation, l'unité d'évaluation étant configurée pour capturer à l'aide des pressions différentielles recherchées au moyen de la pluralité de capteurs de pression la vrille ou les tourbillonnements du fluide entrant ou pour compenser en conséquence le résultat de la mesure.

**12.** Transmetteur de pression active (10) selon l'une quelconque des revendications précédentes, dans un tronçon d'afflux (20) entre le premier élément de raccord (18) et le premier tronçon ou un tronçon d'évacuation (36) entre le deuxième tronçon et le deuxième élément de raccord (20) du transmetteur de pression active (10) étant placé un système de mesure, destiné à déterminer des fluctuations de densité du fluide de processus, lequel comprend un transmetteur d'ultrasons (90) et un récepteur d'ultrasons (91), lesquels sont mutuellement orientés de telle sorte qu'une impulsion ultrasonique émise de la part du transmetteur d'ultrasons (90) par le fluide de processus puisse être réceptionnée de la part du récepteur d'ultrasons (91), le système de mesure étant connecté avec l'unité d'évaluation, laquelle est configurée pour identifier à l'aide de variations du temps de propagation des impulsions ultrasoniques émises des fluctuations de densité dans le fluide de processus.

**13.** Transmetteur de pression active (10) selon la revendication 12, le transmetteur d'ultrasons (90) et le récepteur d'ultrasons (91) étant placés à l'opposée et en rapport à la circonférence du tube, se situant chacun à l'extérieur du point de gravitation le plus bas du corps tubulaire (22).

**14.** Transmetteur de pression active (10) selon la revendication 12 ou 13, le transmetteur d'ultrasons et le récepteur d'ultrasons étant encastrés en profondeur dans la paroi du corps tubulaire (22).

**15.** Procédé, destiné à déterminer la précision de mesure d'un transmetteur de pression active (10) selon l'une quelconque des revendications précédentes, comprenant les étapes consistant à:

- faire passer un fluide de processus à travers le transmetteur de pression active (10),
- déterminer une première pression dans un premier tronçon d'un corps tubulaire (22) du transmetteur de pression active (10) et déterminer une deuxième pression dans un deuxième tronçon du corps tubulaire (22), le diamètre intérieur (32, 28) du corps tubulaire (22) étant plus grand dans le premier tronçon que dans le deuxième tronçon ;
- rechercher la pression différentielle entre la première et la deuxième pression et déterminer un débit du fluide de processus que l'on a fait passer ;
- émettre une onde électromagnétique (82) à partir d'une source (81) placée sur ou dans une paroi intérieure du corps tubulaire (22) sur une surface réfléchissante (80), laquelle est placée sur un tronçon de paroi intérieure du corps tubulaire (22) opposé à la source (81), l'onde électromagnétique (82) n'étant pas incidente à la perpendiculaire sur la surface réfléchissante (80) ;
- réfléchir (85) de manière dirigée l'onde électromagnétique (82) à partir de la surface réfléchissante (80) sur une cellule photoélectrique (83) opposée en oblique à la surface réfléchissante (80) et / ou réfléchir (86) de manière diffuse sur une cellule photoélectrique (84) opposée à la perpendiculaire à la surface réfléchissante (80) ;
- déterminer une diminution de l'intensité de rayonnement détectée au moyen de la cellule photoélectrique (83) opposée en oblique et / ou déterminer une augmentation de l'intensité de rayonnement détectée au moyen de la cellule photoélectrique (84) opposée à la perpendiculaire ;
- procéder à une correction prédéfinie de la pression différentielle recherchée de la part du transmetteur de pression active lors d'un dépassement ou d'une non-atteinte d'une valeur seuil prédéfinie de l'intensité de rayonnement détectée de la part de la cellule photoélectrique (83, 84).

Fig. 1

Fig. 2

Fig. 3

nichtachssymmetrisches
Profil

nichtachssymmetrisches
Profil

achssymmetrisches
Profil

a)

b)

Fig. 4

EP 4 521 072 B1

EP 4 521 072 B1

42,48

42,48

42,48

42,48

42,48

10

42,48

42,48

42,48

12

Fig. 5

a)

Messaufnehmer 1 Pos 8

Messaufnehmer 2 Pos 2

Messumformer Korrekturrechner

Korrigierter Messwert

b)

Messaufnehmer 1 Pos 8

Messaufnehmer 2 Pos 2

Messumformer AUTOZERO Funktion

Nullpunkteinstellung für MA1 und MA2

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017001049 A1
- US 2022178590 A1